# EUROPEAN PATENT SPECIFICATION

(11) **EP 3 803 732 B1**
(45) Date of publication and mention of the grant of the patent: **19.08.2026**
(21) Application number: 19739681.5
(22) Date of filing: 07.06.2019
(51) Int. Cl.: G06Q 10/0633, G06Q 10/0631, G06Q 50/08, G06N 3/0442, G06N 3/0499, G06N 3/09, G06N 3/0455

(54) **METHODS OF CONSTRUCTING A CONSTRUCTION, RELATED SYSTEMS AND COMPUTER PROGRAM PRODUCTS**
VERFAHREN ZUM KONSTRUIEREN EINER BAUKONSTRUKTION, SOWIE ZUGEHÖRIGE SYSTEME UND COMPUTERPROGRAMMPRODUKTE
MÉTHODES DE CONSTRUCTION D'UNE CONSTRUCTION ET SYSTÈMES ET PRODUITS DE PROGRAMMES INFORMATIQUES CONNEXES

(30) Priority: 08.06.2018 GB 201809462
(43) Date of publication of application: 14.04.2021
(73) Proprietor: Nplan Limited, London E1 5JL (GB)
(72) Inventor: MOSCA, Alan, London EC2M 4PL (GB)
(74) Representative: Langley, Peter James
(86) International application number: PCT/GB2019/051591
(87) International publication number: WO 2019/234447

(56) References cited:
- US-A1- 2016 171 406
- ANONYMOUS: "Need building work done?", 1 April 2015 (2015-04-01), pages 1 - 6, XP055955665, Retrieved from the Internet <URL:www.hse.gov.uk/pubns/indg411.htm> [retrieved on 20220829]
- ANONYMOUS: "Causal factors in construction accidents", 1 January 2003 (2003-01-01), pages 1 - 222, XP055955672, Retrieved from the Internet <URL:https://www.hse.gov.uk/research/rrpdf/rr156.pdf> [retrieved on 20220829]
- GILBERTSON ALAN ET AL: "Preventing catastrophic events in construction", CIRIA AND LOUGHBOROUGH UNIVERSITY, 1 January 2011 (2011-01-01), pages 1 - 220, XP055955679, Retrieved from the Internet <URL:https://www.hse.gov.uk/research/rrpdf/rr834.pdf> [retrieved on 20220829]

## Description

### BACKGROUND OF THE INVENTION

### 1. Field of the Invention

The field of the invention relates to methods of constructing a construction, the methods including using a schedule generated using a computer implemented method, and to related systems, computer program products and computer implemented methods.

### 2. Technical Background

Construction projects can be broken down into a plurality of tasks. A construction project may comprise thousands of tasks, from pouring concrete to installing cables. Different projects may comprise different tasks for example, and similar tasks in the same project may have different properties. The tasks may be ordered into schedules, which enable management of the project and in particular management of the project time scale.

Examples of construction projects include the construction of a building, a bridge, a tunnel, a sewer, a railway, an airport, a port, a dam or a road. Each of a building, a bridge, a tunnel, a sewer, a railway, an airport, a port, a dam or a road may be referred to as a "construction." The successfully produced product of a construction project may be referred to as a "construction."

There is a continuing need to improve the accuracy of construction project scheduling.

The UK Health and Safety Executive publication "Causal factors in construction accidents" (2003) states that in the UK, construction workers are six times more likely to be killed at work than employees in other sectors; a similar situation exists for non-fatal accidents. Frequent revision of work schedules leads to problems with project management and undesirable time pressure. With regard to planning it was noted that the parameters for work scheduling always change and may in fact be obsolete even within about three weeks of a project start. Time pressure within work scheduling was mentioned frequently and was described as having effects upon two interacting factors - work performance and the skill base of contractors. To accommodate time pressure in work scheduling it was indicated that unskilled labour and poor subcontractors are sometimes appointed. Nearing the end of a contract, it was reported that performance and quality of work can suffer; negative effects such as short cuts resulting from increased work intensity and trade overlap were cited. Work scheduling was identified as a causal factor in 11 out of 49 significant workplace accidents.

The UK Health and Safety Executive publication "Preventing catastrophic events in construction" (2011) reports survey feedback including that
'Jobs should be slowed down as the rush of programmes and deadlines cause more problems and accidents than anything else'
'More attention should be given to ensuring a realistic and therefore safer time window for all contractors working on a construction site'.

The UK Health and Safety Executive publication "Need building work done?" (2015) states that the commissioner of building work should note that work that is rushed is likely to be unsafe and of poor quality; the commissioner of building work should allow enough time for the design, planning and construction work to be undertaken properly.

There is a need to improve the accuracy of construction project scheduling, in order to improve the safety of construction work, in order to help to achieve a high quality of construction work, and in order to minimize the time and cost required to perform the construction work.

### 3. Discussion of Related Art

EP1286003(A1) and EP1286003(B1) disclose a hydraulic excavator working in fields includes a controller for measuring a working time for each of an engine, a front; a swing body, and a travel body, storing measured data in a memory of the controller, and then transferring it to a base station computer via satellite communication, etc. The transferred data is stored as a database in the base station computer. The base station computer reads the data stored in the database for each hydraulic excavator, calculates a working time of a part belonging to each section on the basis of the working time of that section, and compares the calculated working time with a preset target replacement time interval of the relevant part, thereby calculating a remaining time up to next replacement of the relevant part and managing the scheduled replacement timing thereof. Thus, the appropriate scheduled replacement timing of parts can be determined even in a construction machine having a plurality of sections that differ in working time from each other.

US2016171406A1 discloses a system and method for intelligent project schedule forecasting.

### SUMMARY OF THE INVENTION

According to a first aspect of the invention, there is provided a method of constructing a construction, the method including the computer implemented steps (a) to (f) of:
(a) using a training dataset (S601) comprising the plurality of tasks and data relating to the actual duration times for one or more tasks;
(b) receiving task data corresponding to each task in the training dataset (S602), the task data including: data identifying task type; data relating to the planned task duration, and data relating to any relationships to one or more other tasks;
(c) training a first algorithm to generate task vectors, using the task data (S603);
(d) generating a first plurality of task vectors (S604), each task vector corresponding to one or more tasks, using the first trained algorithm which processes the task data corresponding to the one or more tasks, such that each task has a corresponding task vector;
(e) for each task vector, using a second algorithm which receives the task vector as input and generates data relating to a predicted duration time for the one or more tasks (S605); and
(f)training the second algorithm using the actual duration times (S606);

the constructing including a plurality of tasks, the method including the computer-implemented steps of:
   (i) for the plurality of tasks (S201), receiving task data (S202) corresponding to each task, the received task data including: data identifying task type; data relating to a planned task duration, and data relating to any relationships to one or more other tasks of the plurality of tasks (S203);
   (ii) generating a second plurality of task vectors (S204, S205), each task vector corresponding to one or more corresponding tasks of the plurality of tasks, using the first trained algorithm which processes the received task data corresponding to the one or more corresponding tasks, such that each task has a corresponding task vector;
   (iii) for each task vector, using the second trained algorithm which receives the task vector as input and generates data relating to a predicted duration time for the one or more corresponding tasks (S206);
   (iv) generating a schedule (S207) including data relating to a predicted schedule duration time, using the data relating to the predicted duration times, the schedule including the tasks, which are ordered in the schedule, wherein the data relating to the predicted schedule duration time includes a probability distribution, and wherein generating the data relating to the predicted schedule duration time comprises:
      sampling a respective probability distribution relating to each task vector a plurality of times, to generate a plurality of duration values corresponding to each task vector;
      applying the duration values to the schedule to generate a plurality of duration values corresponding to the schedule;
the method further including the step of:
   (v) constructing the construction using the schedule generated in step (iv), the schedule including the tasks which are ordered in the schedule, and the respective predicted duration times of the ordered tasks.

An advantage of the method is that the construction quality may be improved with respect to prior art methods. An advantage of the method is that the safety of construction workers may be increased with respect to prior art methods. An advantage of the method is that the construction time may be minimized, when compared to prior art methods.

The method may be one wherein the construction is a building, a bridge, a tunnel, a sewer, a railway, an airport, a port, a dam or a road.

The method may be one including the computer-implemented step of: storing the schedule including the data relating to the predicted schedule duration time, and including the tasks which are ordered in the schedule, and the respective predicted duration times of the ordered tasks.

The method may be one wherein the respective predicted duration times of the ordered tasks comprise adjusted values of the planned task durations. An advantage is that an improved construction method is obtained, compared to a method defined by the received task data.

The method may be one wherein the data relating to any relationships to one or more other tasks includes the number of other tasks having a relationship to the task.

The method may be one wherein the generated data relating to a predicted duration time includes a probability distribution. An advantage is that a construction schedule may be provided, which is derived from a probability distribution, which provides a more reliable schedule.

The method may be one wherein the generated data relating to a predicted duration time includes a time value derived from the probability distribution, e.g. a mean, a mode, a median or a cumulative probability time value. An advantage is that a construction schedule may be provided, which is more reliable.

The method may be one wherein an impact of the one or more corresponding tasks corresponding to a task vector is determined by:
sampling the probability distribution relating to the task vector a plurality of times, to generate a plurality of duration values corresponding to the task vector;
applying the duration values to the schedule to generate a plurality of duration values corresponding to the schedule.

The method may be one wherein the impact of the one or more corresponding tasks corresponding to each task vector is determined.

The method may be one wherein, for each task vector, data is generated relating to an impact on the schedule duration time using a third trained algorithm, using the task vector as input.

The method has an advantage that a predicted schedule duration may be provided, which is derived from a probability distribution, which provides a more reliable predicted schedule duration.

The method may be one wherein the data relating to the predicted schedule duration time includes a time value derived from the probability distribution, e.g. a mean, a mode, a median or a cumulative probability time value. An advantage is that a predicted schedule duration may be provided, which is more reliable.

The method may be one wherein for a task including data identifying the type of task, data relating to the planned task duration, and/or data relating to any relationships to one or more other tasks, the data does not comprise a null value.

The method may be one wherein if a task where data identifying the type of task, data relating to the planned task duration, and/or data relating to any relationships to one or more other tasks includes a null value:
a task vector is generated using the first trained algorithm;
a plurality of other task vectors in the schedule which are similar to the task vector are identified;
task data for the other task vectors corresponding to the data comprising a null value for the task vector is identified;
task data for the task vector is generated using the task data for the other task vectors;
an updated task vector is generated for the task using a first trained algorithm taking the task data as input. An advantage is that incomplete data relating to tasks may be completed.

The method may be one wherein the first trained algorithm also uses the task data corresponding to one or more other tasks related to the one or more corresponding tasks as input.

The method may be one wherein the task data corresponding to one or more other tasks is combined into a fixed length vector, which is combined with the task data for the current task.

The method may be one wherein the task vectors correspond to two or more tasks.

The method may be one wherein the number of tasks corresponding to a task vector is defined by a fixed window size, and wherein the task data corresponding to the two or more tasks is combined into a one-dimensional vector for input to the first trained algorithm. An advantage is control over the complexity of the modelling.

The method may be one wherein the first trained algorithm is an encoder part of a neural network based auto-encoder.

The method may be one wherein the second trained algorithm comprises a plurality of neural networks, and wherein the data relating to a predicted duration time is generated by combining the output of the plurality of neural networks.

The method may be one wherein the second algorithm is trained by giving a 1 versus all representation of posterior probability, where the value of P(Rₖ | Tᵢ) for every range R_{K} is 0, except for the range where the true observation, the ground truth, actually happened.

The method of the first aspect of the invention is one in which an advantage is that the first and second algorithms are well-trained for their respective purposes.

The method may be one further including the computer implemented steps of: sampling the probability distribution relating to the task vector a plurality of times, to generate a plurality of duration values corresponding to the task vector;
applying the duration values to the schedule to generate a plurality of duration values corresponding to the schedule;
determining an impact of the one or more tasks corresponding to the task vector;
training a third algorithm to generate impact data, using the determined impact.

The method may be one including the computer-implemented steps of identification of risky schedule items in the schedule, in a dimension, such as time, monetary, cost, or safety, and receiving input from a planner, and using that input to modify the schedule, for example to reduce risk on identified risky schedule items.

The method may be one wherein the constructing a construction comprises a group of projects, or a portfolio of projects.

The method may be one wherein the constructing a construction comprises a subproject of a larger project.

The method may be one wherein the schedule provides for a reduced risk of construction accidents.

The method may be one wherein the schedule provides for an improved quality of the construction.

The method may be one wherein the schedule provides for minimization of the time to construct the construction.

The method may be one including the computer-implemented steps of an input reader parsing project schedules in various file formats and processing the resulting data, and writing the processed data to a common database using a standard format.

The method may be one including the computer-implemented step of an input filter being used to detect and to remove erroneous schedule data to prevent the erroneous schedule data being used further.

The method may be one including the computer-implemented step of a hierarchical language model converting text information contained within the received task data into a common multi-dimensional parameter space with different hierarchies representing contextual information at specified levels of granularity.

The method may be one including the computer-implemented step of a dataset tabulator being used to combine textual and non-textual information from the schedule and tasks contained therein and to construct dataset tables that include schedule features and associated outcomes suitable for training and testing predictive models.

The method may be one including the computer-implemented step of using an inference model, trained using a machine learning algorithm, that trains parameters to characterise probability distributions of the associated outcomes of the scheduled tasks based on the tabulated schedule features.

The method may be one wherein the predicted duration times include predicted probability distributions, the method including using the predicted probability distributions to simulate the outcomes of sequences of tasks in order to simulate progression of the schedule over time and to construct probability distributions for schedule milestones and project completion as well as to evaluate risk factors that may adversely impact upon schedule progression.

The method may be one wherein, in step (ii), the transformation process is learned from data of historical schedules, by presenting data from multiple tasks (optionally, presenting data from multiple tasks at the same time), such that the model learns about the typical surrounding context of each task, and how to represent it with respect to its peers.

The method may be one wherein the model used to learn such representations is a deep autoencoder, wherein a part of the deep autoencoder is stored after training to create the transformation.

The method may be one wherein the tasks include a transferable inference property.

The method may be one wherein after the distributions of duration outcomes have been estimated, these are included in a simulation based on random sampling, to estimate the distribution of the final outcome, by applying the new sampled durations to the entire schedule, with constraints, by repeatedly sampling new durations for each task in the schedule and recalculating the projected end date of the schedule, to collect a distribution of possible outcomes.

The method may be one wherein, to accumulate the impact of a single task on the end date of the schedule's project, the following computer-implemented steps are performed:
A) Repeat multiple times (N):
   a) Sample an outcome Oᵢ for the Task;
   b) Apply all constraints and recalculate the end date of the project based on the new end date of the task at hand, assuming all other tasks with no delay;
   c) Record the delay caused to the whole project for the task at hand;
B) Store a cumulative record of all end date impacts, to represent a distribution of impact that the task will have on the end date of the project.

The method may be one wherein the steps A) and B) are repeated for every task and then the tasks are sorted by impact, and the sorted tasks are presented to show (e.g. to a construction manager) the most important tasks in a schedule.

The method may be one wherein for a partially completed construction, training the first and second algorithms includes using schedules with data relating to the partially completed construction of the construction. An advantage is that an improved schedule is provided, because the improved schedule is based partly on learning obtained from the partially completed construction.

The method may be one wherein, for a partially completed construction, a new schedule is generated, including using data relating to the progress of the partially completed construction. An advantage is that an improved schedule is provided, because the improved schedule takes into account the progress of the partially completed construction.

The method may be one wherein a predicted duration time for the one or more tasks is presented on a display using a histogram, where each bucket of the histogram represents a time-dimension prediction of the task, and the height of the histogram represents the probability of this outcome.

The method may be one wherein the generated schedule including the data relating to a predicted schedule duration time, and including the tasks, which are ordered in the schedule, is presented on a display using a Gantt chart, wherein an impact each individual task has upon the schedule is highlighted, e.g. using colour and/or distinctive shapes.

The method may be one wherein the Gantt chart indicates a critical path.

The method may be one wherein the Gantt chart highlights risk on an individual activity basis.

The method may be one wherein for a partially completed construction, the actual progress of the construction is plotted as a function of time, and the originally planned progress of the construction is plotted as a function of time, and is presented on a display.

The method may be one wherein for a partially completed construction, a specific probability likelihood is received from a user, and the progress of the construction is plotted as a function of time for the specific probability likelihood received from the user, and is presented on a display.

The method may be one wherein an array of tiles is presented on a display with respect to two axes, the first axis representing respective portions of the construction of the construction, and the second axis representing respective ranges of completion outcomes of the respective portions of the construction of the construction, wherein each tile includes a presentation of how likely the respective range of completion outcomes is to occur.

The method may be one wherein the array of tiles provides a heatmap-style graphical representation.

The method may be one wherein the method includes the computer implemented step of validating or rejecting the schedule by comparing a risk profile to a predefined set of parameters.

According to a second aspect of the invention, there is provided a computer system configured to provide a schedule for constructing a construction, the constructing including a plurality of tasks, the computer system configured to:
(a) use a training dataset (S601) comprising the plurality of tasks and data relating to the actual duration times for one or more tasks;
(b) receive task data corresponding to each task in the training dataset (S602), the task data including: data identifying task type; data relating to the planned task duration, and data relating to any relationships to one or more other tasks;
(c) train a first algorithm to generate task vectors, using the task data (S603);
(d) generate a first plurality of task vectors (S604), each task vector corresponding to one or more tasks, using the first trained algorithm which processes the task data corresponding to the one or more tasks, such that each task has a corresponding task vector;
(e) for each task vector, use a second algorithm which receives the task vector as input and generates data relating to a predicted duration time for the one or more tasks (S605); and
(f) train the second algorithm using the actual duration times (S606);

the computer system configured to:
   (i) for the plurality of tasks (S201), receive task data (S202) corresponding to each task, the received task data including: data identifying task type; data relating to a planned task duration, and data relating to any relationships to one or more other tasks of the plurality of tasks (S203);
   (ii) generate a second plurality of task vectors (S204, S205), each task vector corresponding to one or more corresponding tasks of the plurality of tasks, using the first trained algorithm which processes the received task data corresponding to the one or more corresponding tasks, such that each task has a corresponding task vector;
   (iii) for each task vector, use the second trained algorithm which receives the task vector as input and generates data relating to a predicted duration time for the one or more corresponding tasks (S206);
   (iv) generate a schedule (S207) including data relating to a predicted schedule duration time, using the data relating to the predicted duration times, the schedule including the tasks, which are ordered in the schedule, wherein the data relating to the predicted schedule duration time includes a probability distribution, and wherein generating the data relating to the predicted schedule duration time comprises:
      sampling a respective probability distribution relating to each task vector a plurality of times, to generate a plurality of duration values corresponding to each task vector;
applying the duration values to the schedule to generate a plurality of duration values corresponding to the schedule;
   (v) provide the schedule generated in (iv), the schedule including the tasks which are ordered in the schedule, and the respective predicted duration times of the ordered tasks.

The computer system may be one further configured to store the schedule including the data relating to the predicted schedule duration time, and including the tasks which are ordered in the schedule, and the respective predicted duration times of the ordered tasks.

The computer system may be one further configured to perform a method of any aspect of the first aspect of the invention.

According to a first aspect of the disclosure, there is provided a computer program product executable on a processor to provide a schedule for constructing a construction, the constructing including a plurality of tasks, the computer program product executable to:
(i) for the plurality of tasks, receive task data corresponding to each task, the received task data including: data identifying task type; data relating to a planned task duration, and data relating to any relationships to one or more other tasks of the plurality of tasks;
(ii) generate a plurality of task vectors, each task vector corresponding to one or more corresponding tasks of the plurality of tasks, using a first trained algorithm which processes the received task data corresponding to the one or more corresponding tasks, such that each task has a corresponding task vector;
(iii) for each task vector, use a second trained algorithm which receives the task vector as input and generates data relating to a predicted duration time for the one or more corresponding tasks;
(iv) generate a schedule including data relating to a predicted schedule duration time, using the data relating to the predicted duration times, the schedule including the tasks, which are ordered in the schedule;
(v) provide the schedule generated in (iv), the schedule including the tasks which are ordered in the schedule, and the respective predicted duration times of the ordered tasks.

The computer program product may be further executable to store the schedule including the data relating to the predicted schedule duration time, and including the tasks which are ordered in the schedule, and the respective predicted duration times of the ordered tasks.

The computer program product may be further executable to perform a computer implemented method of any aspect of the first aspect of the invention.

According to a second aspect of the disclosure, there is provided a computer-implemented method of training a system for modelling a construction project comprising a plurality of tasks, the method including the steps of:
(a) using a training dataset comprising a plurality of tasks and data relating to the actual duration times for one or more tasks;
(b) receiving task data corresponding to each task in the training dataset, the task data including: data identifying task type; data relating to the planned task duration, and data relating to any relationships to one or more other tasks;
(c) training a first algorithm to generate task vectors, using the task data;
(d) generating a plurality of task vectors, each task vector corresponding to one or more tasks, using the first trained algorithm which processes the task data corresponding to the one or more tasks, such that each task has a corresponding task vector;
(e) for each task vector, using a second algorithm which receives the task vector as input and generates data relating to a predicted duration time for the one or more tasks; and
(f) training the second algorithm using the actual duration times. An advantage is that the first and second algorithms are well-trained for their respective purposes.

The method may be one including the step of storing the first trained algorithm, and storing the second trained algorithm.

The method may be one further including the computer-implemented steps of:
sampling the probability distribution relating to the task vector a plurality of times, to generate a plurality of duration values corresponding to the task vector;
applying the duration values to the schedule to generate a plurality of duration values corresponding to the schedule;
determining an impact of the one or more tasks corresponding to the task vector;
training a third algorithm to generate impact information, using the determined impact.

The method may be one including the step of storing the third trained algorithm.

According to a third aspect of the disclosure, there is provided a computer system, configured to perform a method of any aspect of the second aspect of the disclosure.

According to a fourth aspect of the disclosure, there is provided a computer program product, executable to perform a method of any aspect of the second aspect of the disclosure.

According to a fifth aspect of the disclosure, there is provided a computer-implemented method, including the steps of:
(i) for a plurality of tasks in a construction, receiving task data corresponding to each task, the received task data including: data identifying task type; data relating to a planned task duration, and data relating to any relationships to one or more other tasks of the plurality of tasks;
(ii) generating a plurality of task vectors, each task vector corresponding to one or more corresponding tasks of the plurality of tasks, using a first trained algorithm which processes the received task data corresponding to the one or more corresponding tasks, such that each task has a corresponding task vector;
(iii) for each task vector, using a second trained algorithm which receives the task vector as input and generates data relating to a predicted duration time for the one or more corresponding tasks;
(iv) generating a schedule including data relating to a predicted schedule duration time, using the data relating to the predicted duration times, the schedule including the tasks, which are ordered in the schedule.

### BRIEF DESCRIPTION OF THE FIGURES

Aspects of the invention will now be described, by way of example(s), with reference to the following Figures, in which:
**Figure 1** shows a schematic illustration of an example system for modelling a construction project in accordance with an example;
**Figure 2(a)(i)** shows a flow chart illustrating a method for modelling a construction project according to an example;

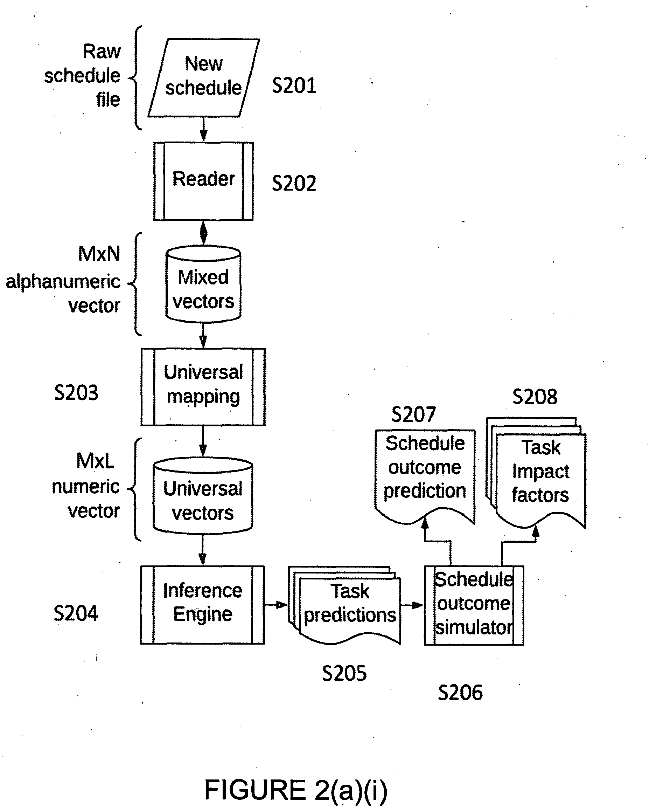

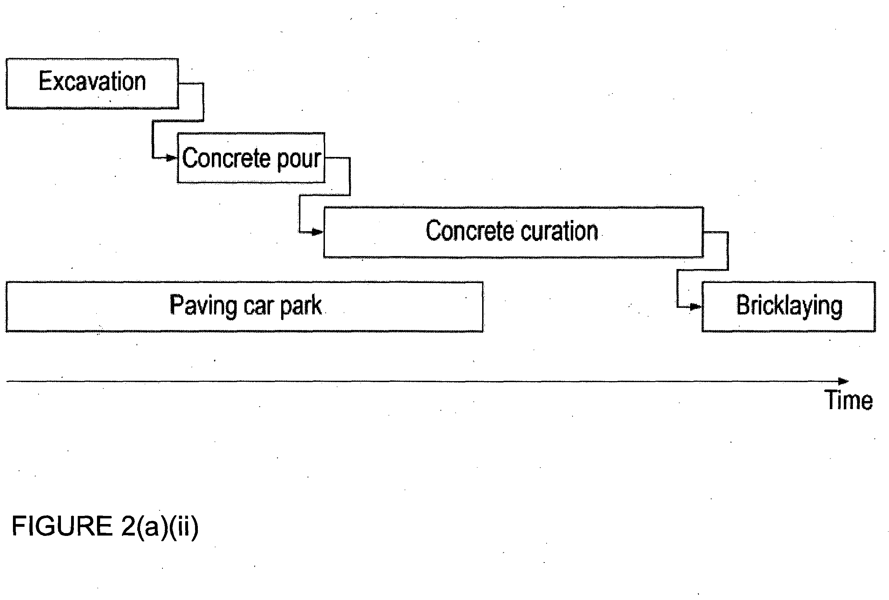

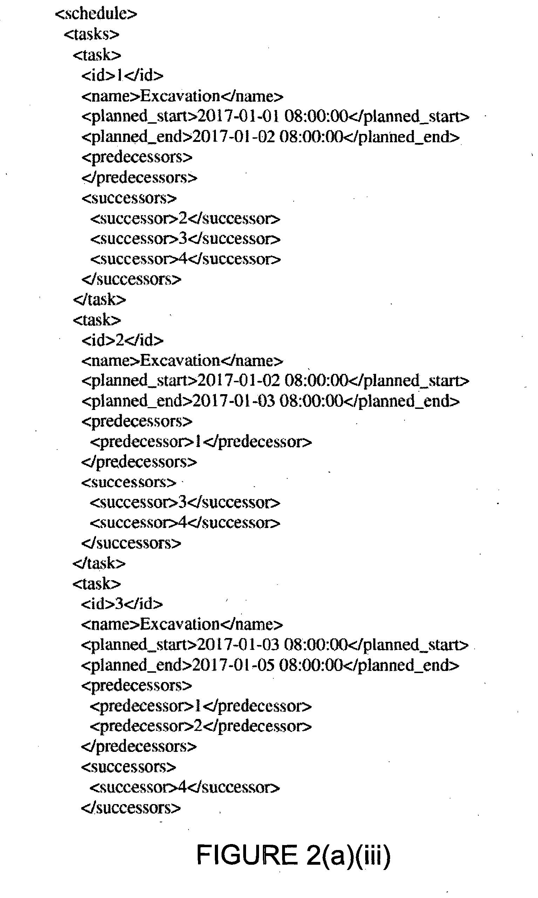

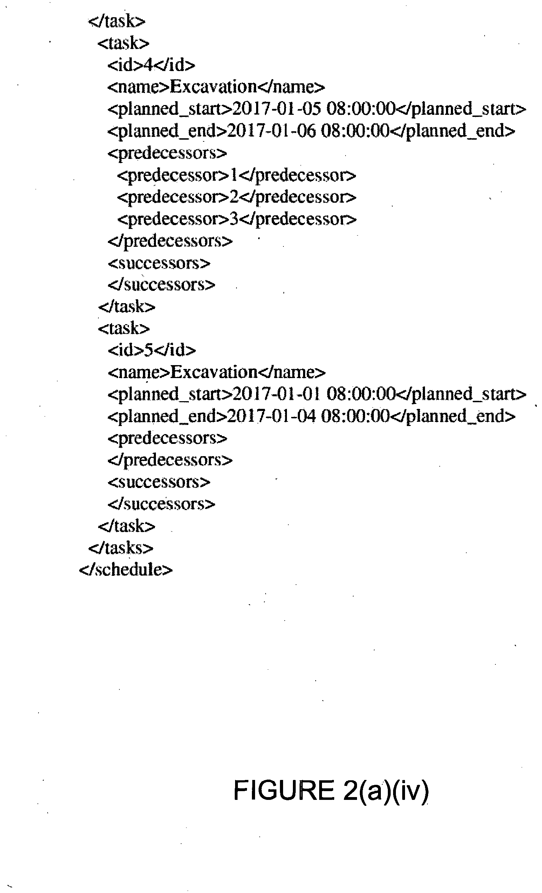

**Figure 2(a)(ii)** shows an example schedule;
**Figure 2(a)(iii)** shows the first part of an example schedule with the associated task property data;
**Figure 2(a)(iv)** shows the second part of an example schedule with the associated task property data, which follows from the first part of the example schedule shown in **Figure 2(a)(iii);**

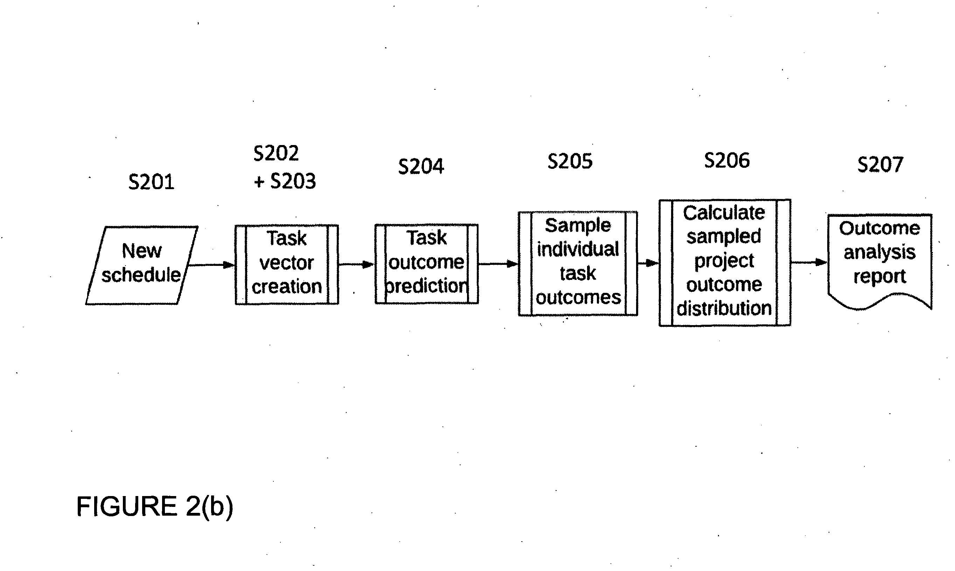

**Figure 2(b)** shows a flow chart illustrating a method for modelling a construction project according to an example;

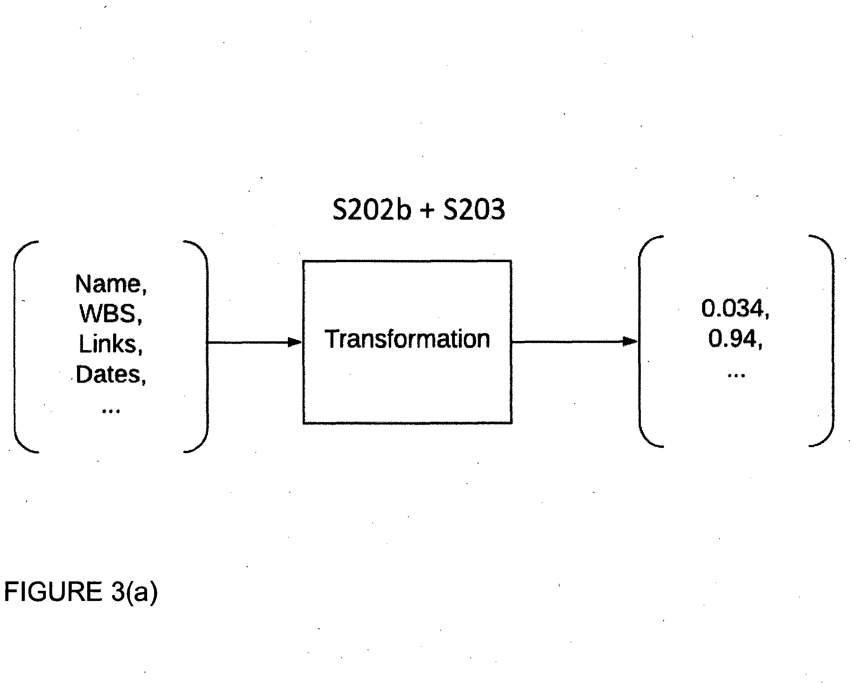

**Figure 3(a)** shows an example transformation from the task information read by the reader into the task vector;

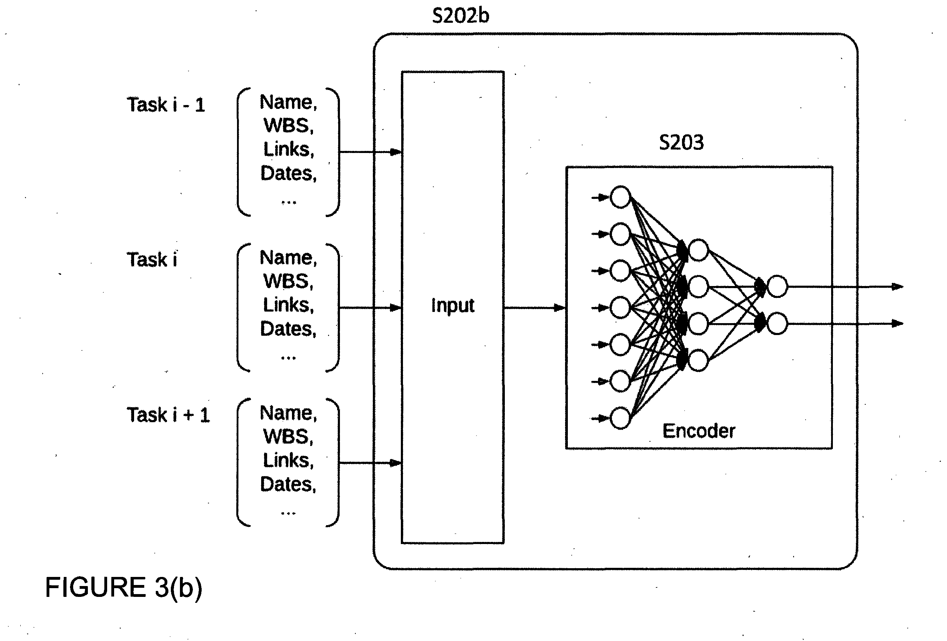

**Figure 3(b)** shows a schematic illustration of an example transformation with a simplified example encoder neural network;

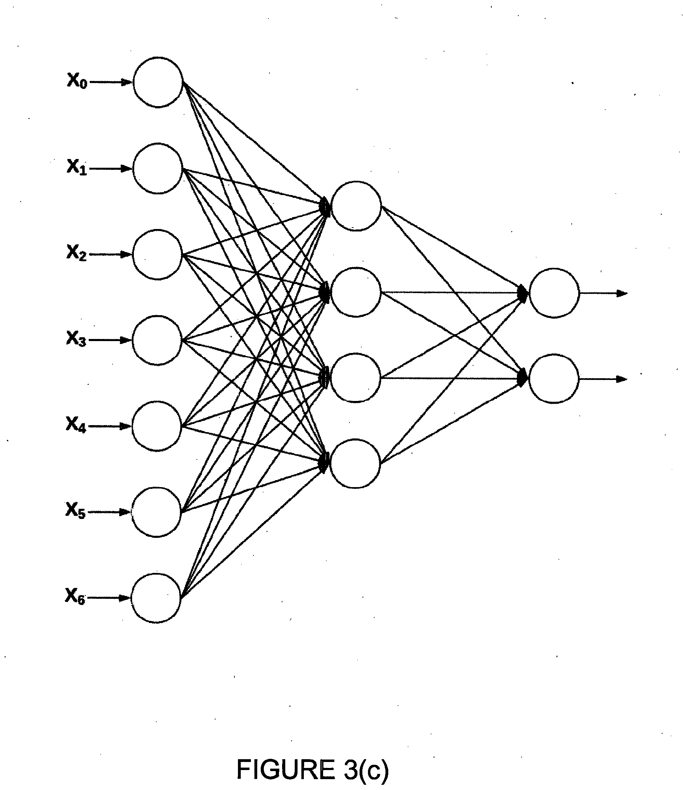

**Figure 3(c)** shows a schematic illustration of a simplified example encoder neural network;

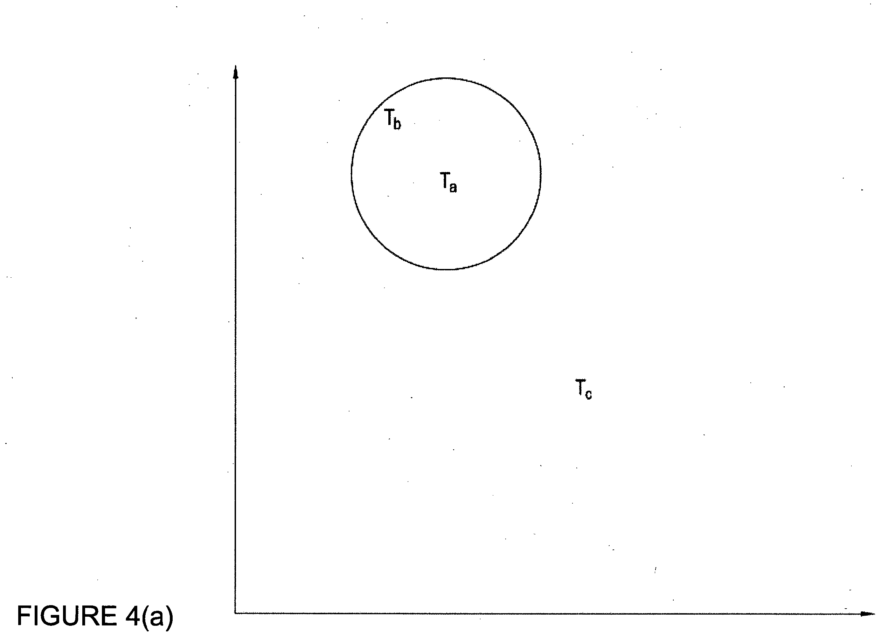

**Figure 4(a)** shows a schematic illustration of an example 2-dimensional representation of a neighbourhood of a task;

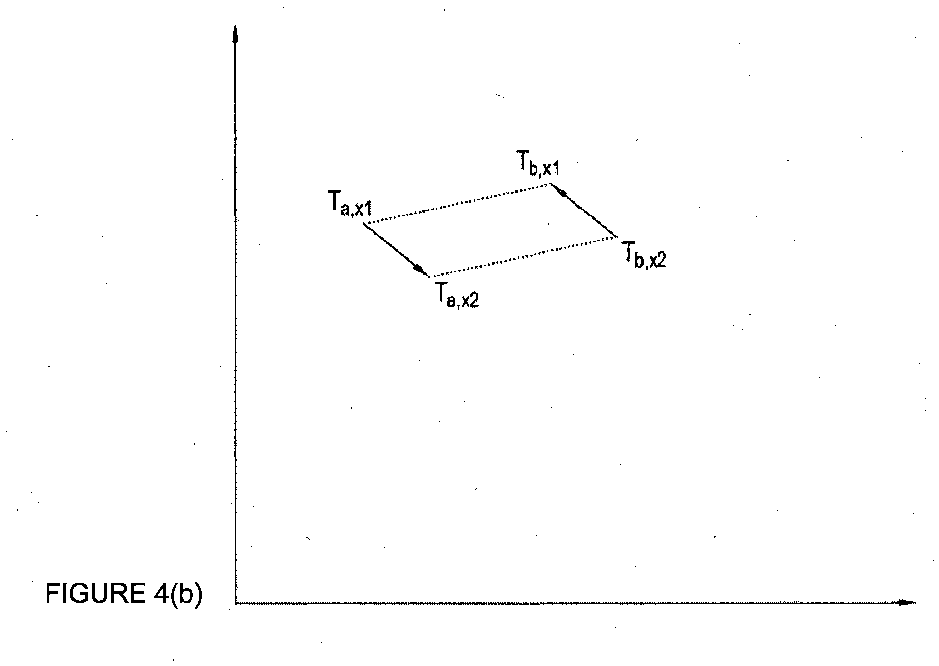

**Figure 4(b)** shows a schematic illustration of an example 2-dimensional representation of the transferrable inference property of a task vector;

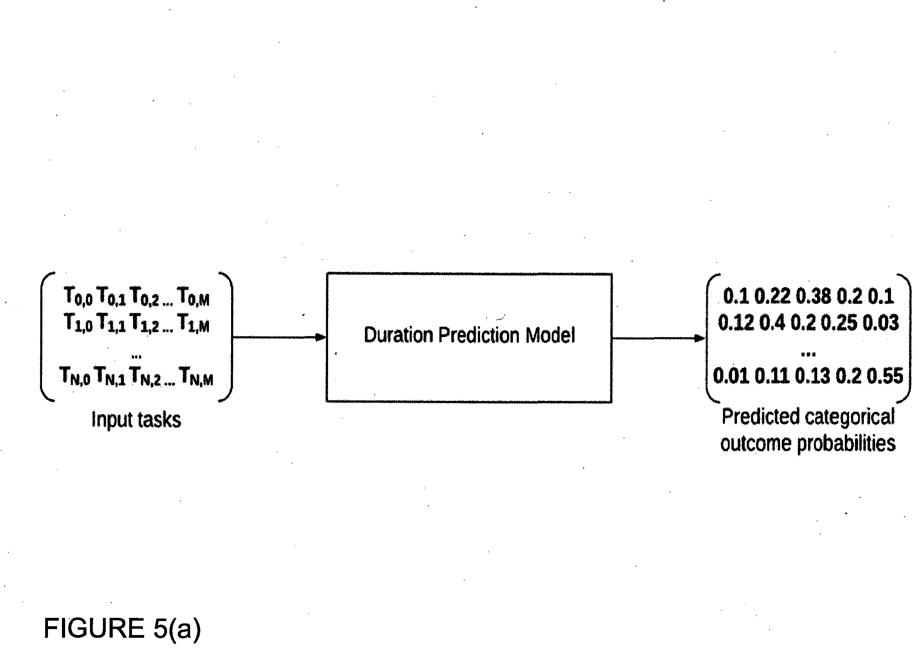

**Figure 5(a)** shows an example schematic illustration of the operation of the duration prediction model;

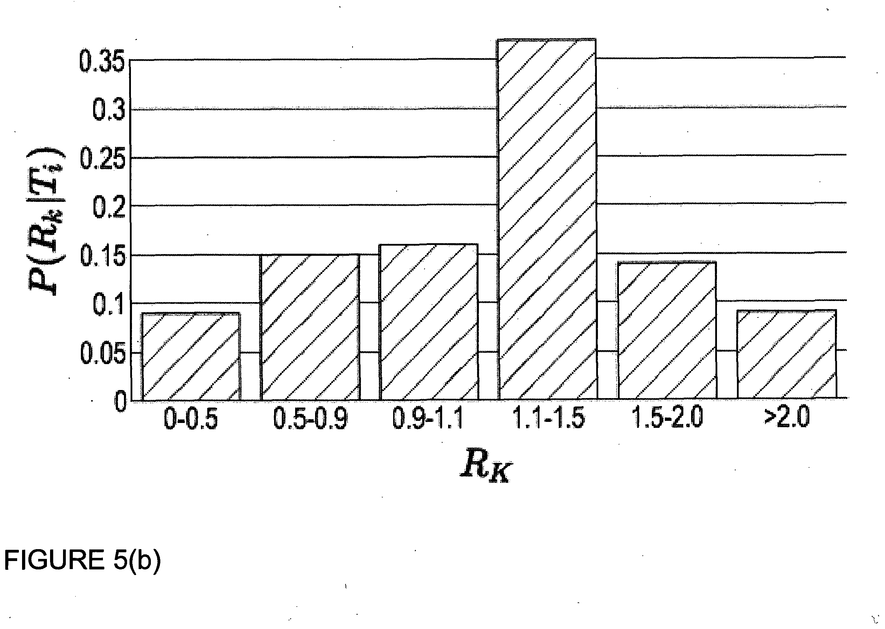

**Figure 5(b)** shows an example output probability distribution;

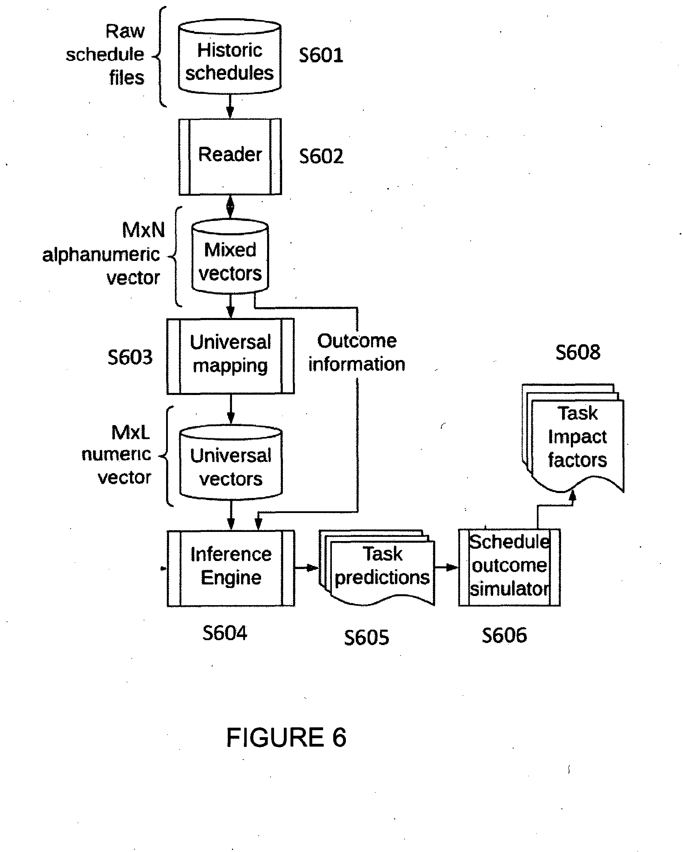

**Figure 6** shows a schematic illustration of a method of training a system for modelling a construction project in accordance with an example;

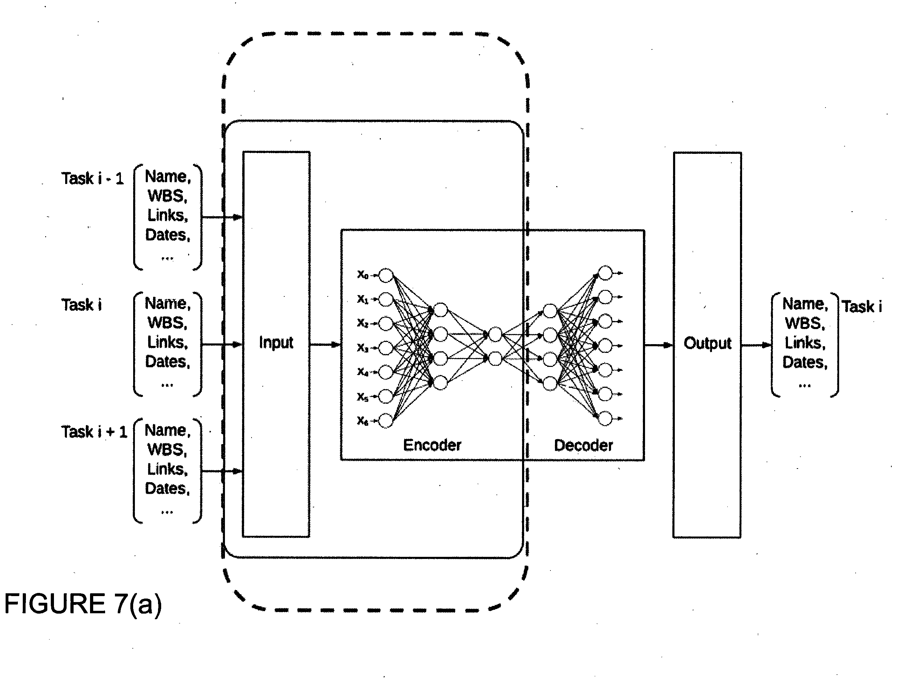

**Figure 7(a)** shows a schematic illustration of a simplified example of an auto-encoder;

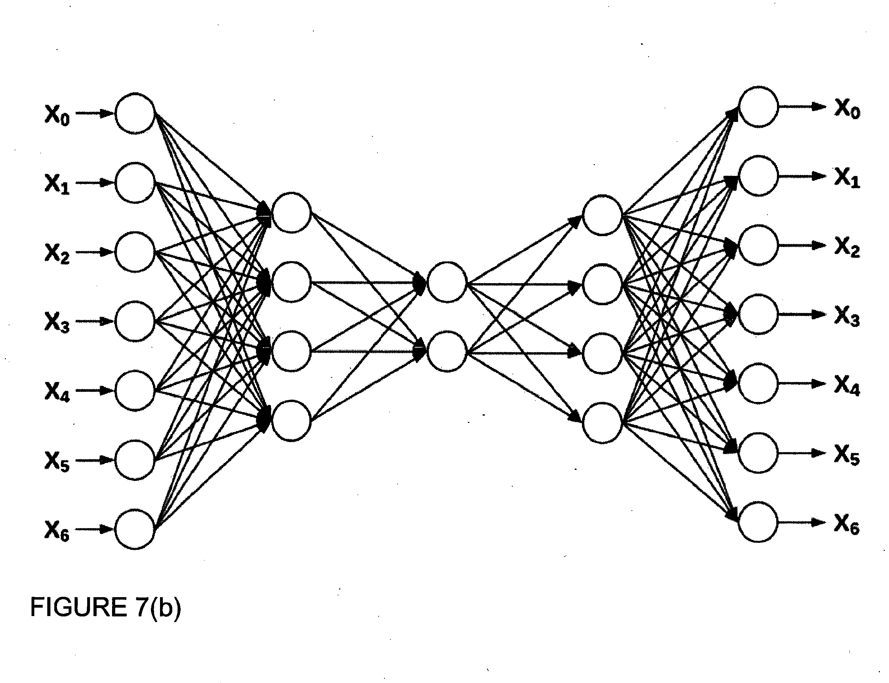

**Figure 7(b)** shows a schematic illustration of a simplified example of an auto-encoder neural network;

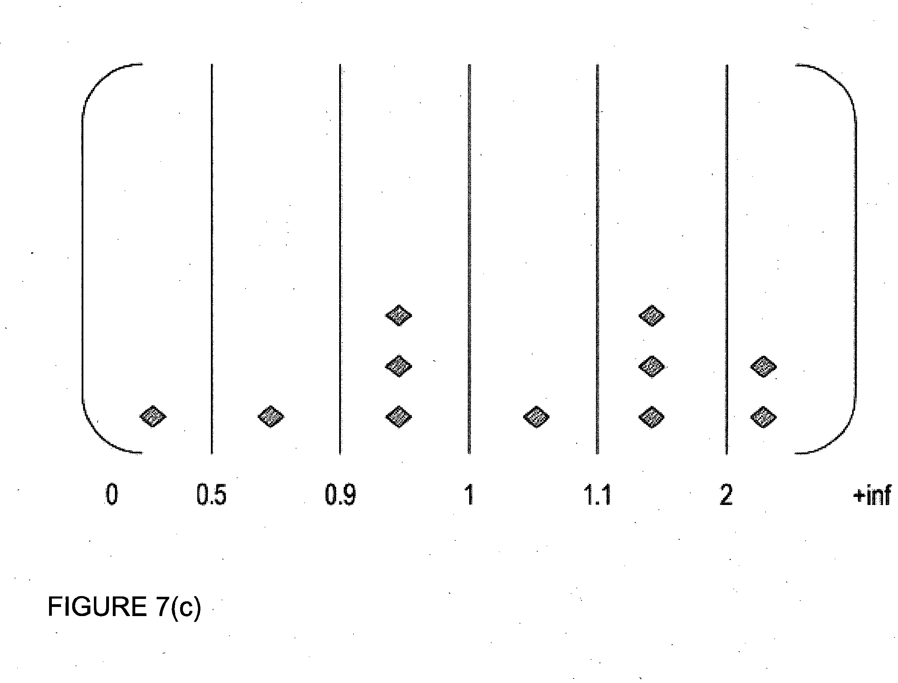

**Figure 7(c)** shows an example of how the relative increase in task duration in the training data can be separated into arbitrary ranges;

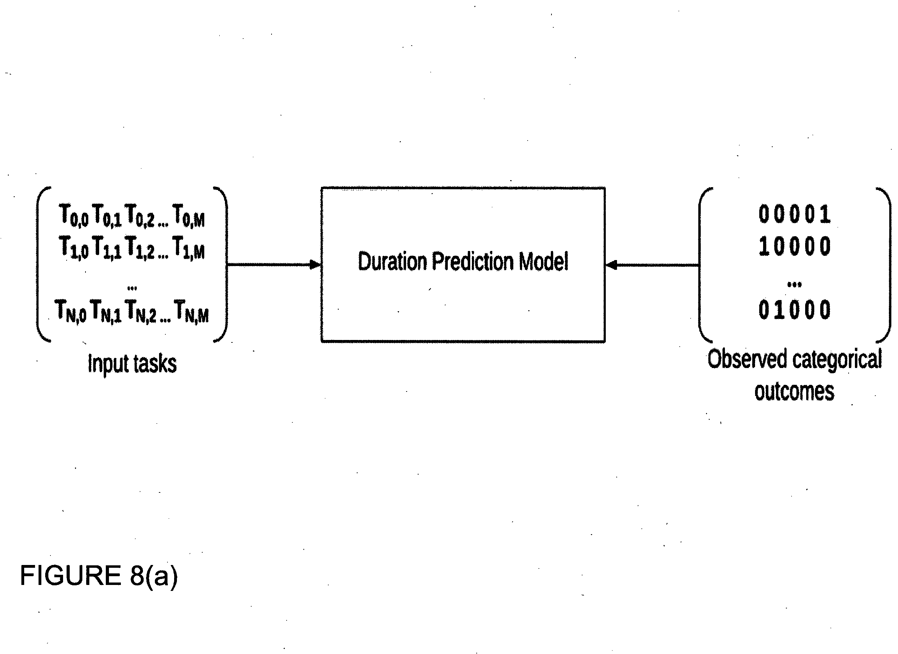

**Figure 8(a)** shows an example schematic illustration of the second trained algorithm, being trained on an observed outcome of a task;

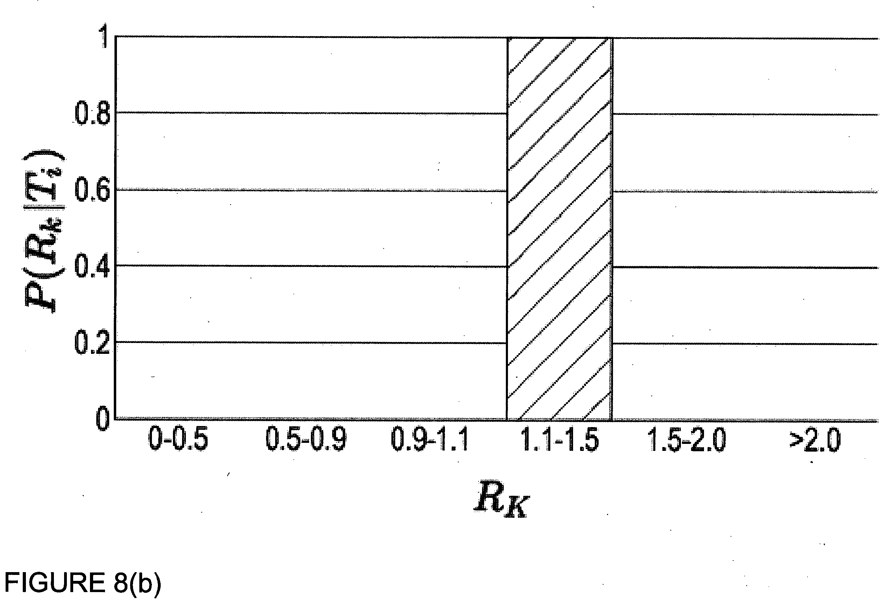

**Figure 8(b)** shows an example probability distribution used as the outcome to train the model.

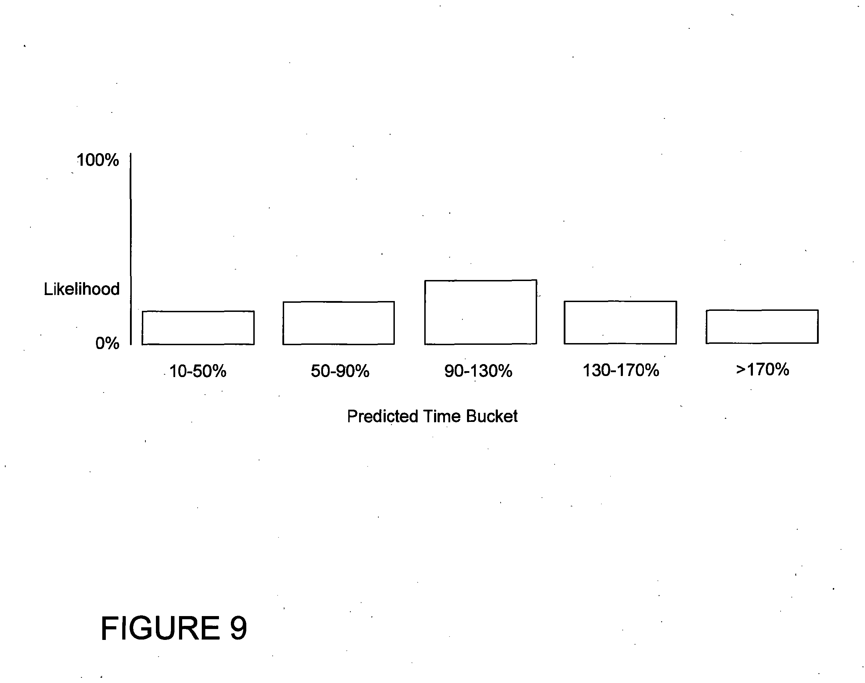

**Figure 9** shows an example of a probabilistic prediction on an individual task level using a histogram, where each bucket of the histogram represents a time-dimension prediction of the task.

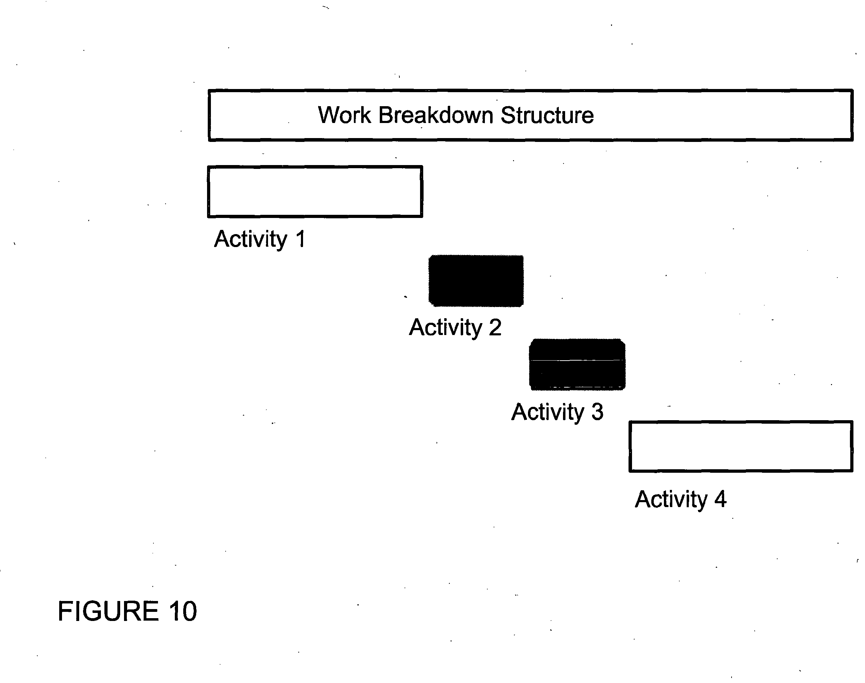

**Figure 10** shows an example in which a high risk is indicated for Activity 2 and Activity 3, by showing their corresponding bars on the Gantt chart in black, and a lower risk is indicated for Activity 1 and Activity 4, by showing their corresponding bars on the Gantt chart in white.

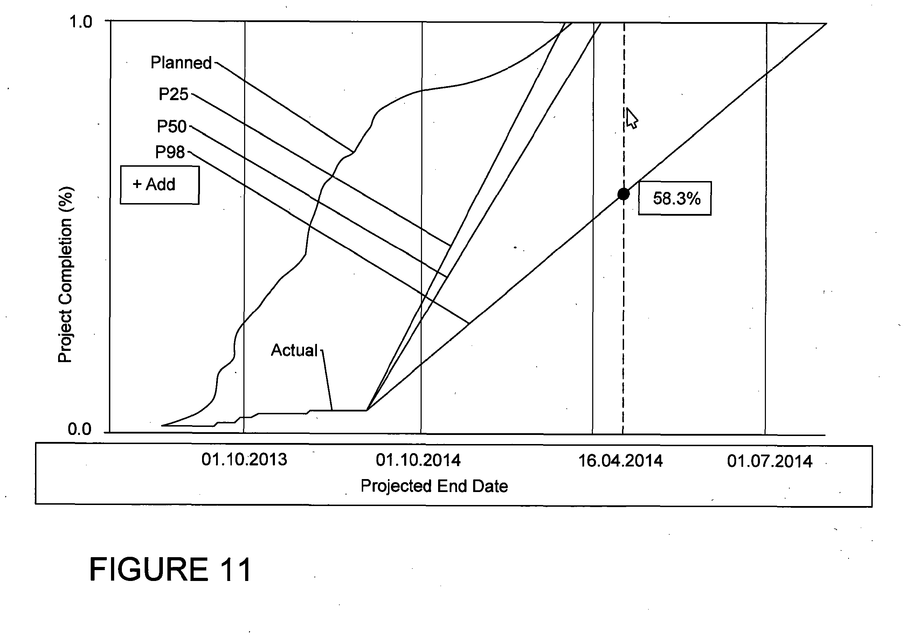

**Figure 11** shows an example in which the *actual progress* of the project (up to the actual completion date) is plotted against the *planned progress* (to the planned completion date), while the outcomes of predictions are plotted on other curves and are configurable by a user to define a respective specific probability likelihood.

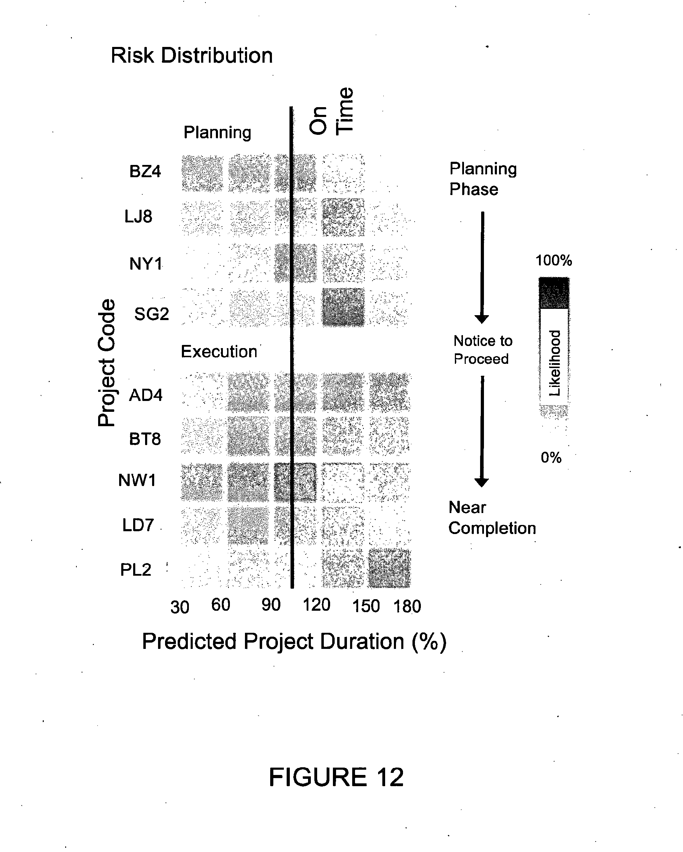

**Figure 12** shows an example of a heatmap-style graphical representation of how likely a project will be to finish in defined time ranges.

### DETAILED DESCRIPTION

Predicting the outcomes of a construction project helps the construction entity to understand the complexities and the risks of the construction project.

In an example, our machine learning engine digests hundreds of millions of schedule tasks. We understand context and detect patterns in task performance and schedule adherence. We generate predictions based on a schedule (e.g. your schedule), ensuring reliable accuracy. We believe that by creating transparency and certainty, we'll change the outcomes of construction projects, globally.

We include a Description of a machine learning system which forms part of a prediction engine we have built.

### Example System Overview

In an example, the system includes a number of components that interact with each other, predominantly in a "pipeline" fashion:
- An input reader that parses project schedules from different clients in various file formats and processes the data in order to write their contents to a common database using a standard format adopted throughout the rest of the pipeline.
- An input filter that detects and removes clearly erroneous schedule data to prevent such errors from entering the remainder of the pipeline.
- A hierarchical language model that converts the text information contained within schedule data into a common multi-dimensional parameter space with different hierarchies representing contextual information at specified levels of granularity.
- A dataset tabulator that combines textual and non-textual information from the schedule and tasks contained therein and constructs dataset tables that include schedule features and associated outcomes intended for training and testing predictive models.
- An inference model, trained using a machine learning algorithm, that trains parameters to characterise probability distributions of the outcomes of schedule tasks based on the features tabulated in the previous step.
- A simulator that uses the probability distributions predicted by the inference model to simulate the outcomes of sequences of tasks in order to simulate progression of schedules over time and construct probability distributions for schedule milestones and project completion as well as to evaluate risk factors that may adversely impact upon schedule progression.

### Example System Inputs

The input data comprises completed project schedules containing activities with their associated features and outcomes, where known. Using the input reader, the system reads and processes task fields T₀...Tₙ that may include among others:
- Task name.
- Names of all parent tasks.
- Names of all related work breakdown structure elements.
- Planned start and end dates.
- Actual start and end dates.
- Relationships (links) to other tasks.
- Any resource allocations to the task (optional).
- Any quantities allocated to the task (optional).

Any task feature Tᵢ is admissible as long as it either exists, or can be inferred, or can be replaced by a token representing a null value for tasks within its corresponding schedule. An example system input is shown in the column on the left hand side of **Figure 3(a)****.**

### Example Task transformation stage

The transformation step receives as input one or more available properties about a single task item, and outputs a vector representing that task **Rⁿ. Tᵢ** which is of arbitrary dimensionality, and can be proportional to the number of tasks available and the number of properties available for each task. **Figure 3(a)** shows an example transformation from the task information read by the reader into the task vector.

An example representation of a task in numerical vector form is shown in the column on the right hand side of **Figure 3(a)****.**

The transformation process may be learned from data of historical schedules, by presenting data from multiple tasks (optionally, presenting data from multiple tasks at the same time), such that the model can learn information about the typical *surrounding context* of each task, and how to represent it with respect to its peers. The model used to learn such representations is a *deep autoencoder,* where the first half is preserved after training to create the transformation. A *surrounding context* is defined as all other tasks in the same-schedule that have a temporal or dependent connection with the task being learned.

An autoencoder may be used to create the embedded space transformation of a Task. An example is shown in **Figure 7(a)****.** A part is retained to transform tasks during the inference stage of the machine learning process. An example of a part retained to transform tasks during the inference stage of the machine learning process is indicated by the part enclosed by dashed lines in **Figure 7(a)****.**

*A deep autoencoder is* a type of neural network with a *bottleneck* layer, that learns to represent at its output the same data it receives as input, or a subset of it, whilst transmitting information through the bottleneck. This *bottleneck* layer is sized such that it is the smallest layer in the network, and has a lower number of neurons than the inputs.

An example of a deep autoencoder with 7 inputs, 7 outputs and 5 layers, with a bottleneck layer of 2 neurons, is shown in the middle of **Figure 7(a)****.**

### Salient properties of the learned latent space

The *latent* (or *embedded*) space in which **Tᵢ** lives, is a space in which similar tasks are represented by similar vectors. So if **| Tₐ** - **T_{b}|** < **| Tₐ** - **T_{c} |** we can say that **T_{b} is** more similar to **Tₐ** than **Tₐ** is similar to **T_{c}.** Moreover, if **T_{a,x1}** represents task A in location X1, **T_{a,x2}** represents task A in location X2, and **T_{b,x2}** represents task B in location X2, then the resulting vector of **T_{a,x1}** - **T_{a,x2}** + **T_{b,x2}** will be similar to the representation of task B in location X1, **T_{b,x1}.** We call this the transferrable inference property.

An example of a 2-dimensional representation of a neighbourhood of Tₐ is shown in **Figure 4(a)****.** An example of a 2-dimensional representation of the transferrable inference property is shown in **Figure 4(b)****.**

### 5 Outcomes predictors

For each **Tᵢ an** outcome yᵢ, which is to be the object of the predictions, is associated to form a two-dimensional vector **Q** $Q = \left(\begin{matrix}{T}_{0} , {y}_{0} \\ {T}_{1} , {y}_{1} \\ … \\ {T}_{i} , {y}_{i}\end{matrix}\right) = \left(\begin{matrix}{T}_{0,0} {T}_{0,1} {T}_{0,2} … {T}_{0 , N} \\ {y}_{0} \\ {T}_{1,0} {T}_{1,1} {T}_{1,2} … {T}_{1 , N} \\ {y}_{1} \\ … \\ {T}_{i , 0} {T}_{i , 1} {T}_{i , 2} … {T}_{i , N} {y}_{i}\end{matrix}\right)$

**Q** may then be used to train a machine learning predictor *b* which learns to estimate the probability of outcome y from the input **T.**

### 5 Example Duration predictor stage

In an example, we define a major outcome to be the relative increase in task duration Rᵢ. This is the actual duration (e.g. in calendar hours) divided by the planned duration. The result is the actual relative increase in work time for the project. The data can be represented as a direct prediction of a precise value, and this is a perfectly acceptable way of structuring the duration prediction as a *regression* problem. However, by dividing the possible values of Rᵢ into an arbitrary number of ranged buckets, the problem can be structured as a *classification* problem. Moreover, any machine learning algorithm that learns this classification problem, will also be able to predict the probability P(Rₖ | Tᵢ) for every outcome range R_{K} for task Tᵢ. The training of the algorithm will be done by giving a 1 versus all representation of posterior probability, where the value of P(Rₖ | Tᵢ) for every range R_{K} is 0, except for the range where the true observation (the ground truth) actually happened.

An example of how the relative increase in task duration can be separated in arbitrary range buckets is shown in **Figure 7(c)****,** in which Rᵢ is represented on the horizontal axis. Each diamond represents a task.

An example of the distribution over Rₖ used to train a model is shown in **Figure 8(b)****.**

An example of the distribution over Rₖ that would be seen as output from the model is shown in **Figure 5(b)****.**

An example of a prediction model operating on a task input is shown in **Figure 5(a)****.**

An example of a prediction model being trained on an observed outcome of a task is shown in **Figure 8(a)****.**

### Sampling new durations from the distribution estimation

The distribution over Rₖ can be used to randomly sample outcomes, in two stages:
First, a random weighted sample is taken to identify which bucket in Rₓ the sample will fall in. Second, a sample is taken from a uniform distribution between the upper and lower boundaries of the bucket. This second sample is used to calculate the new duration of the task, and the new adjusted end date.

### Automatic simulation of outcomes via Monte Carlo sampling

Once the distributions of duration outcomes have been estimated, these can be included in a simulation based on random sampling, as described above, to estimate the distribution of the final outcome, by applying the new sampled durations to the entire schedule, with constraints. This can be achieved by repeatedly sampling new durations for each task in the schedule and recalculating the projected end date of the schedule, with the aim of collecting a distribution of possible outcomes.

### Discovery of impact of a task on end date

The following procedure describes how to accumulate the impact of a single task on the end date of the schedule's project.
1) Repeat multiple times (N):
   a) Sample an outcome Oᵢ for the Task as described above
   b) Apply all constraints and recalculate the end date of the project based on the new end date of the task at hand, assuming all other tasks with no delay
   c) Record the delay caused to the whole project for the task at hand
2) The cumulative record of all end date impacts represents a distribution of impact that the task will have on the end date of the project.

Repeating this procedure for every task allows to sort the tasks by impact and show (e.g. to a construction manager) the most important tasks in a schedule.

### Impact Estimator Network

This process can then be improved further by looking at the aggregate of multiple simulations, and obtaining a training set of final impact of each task - therefore enabling the creation of an *impact estimator* network. This is useful if, for example, a schedule does not correctly encode all the relevant logical dependencies between tasks.

### Using regular progress updates on a project to improve predictions for the remainder of the project

For projects currently in execution, additionally to learning from the history of past projects, the learning can be extended to schedules with information about the partial completion of the project. The aggregate difference for tasks that appear in both updates (a and b) can be used to estimate the additional risk added to the project.

Additionally, any tasks that have already been completed can be used to form a small updated dataset from which to learn a refined, project-specific version of the model.

### Learning representations of sequences of tasks

A sequence of tasks may be represented as a sequence of vector-encodings, or therefore as a bidimensional matrix. While each of these vector-encodings can be treated independently, they are indexed and therefore it is possible to evaluate any conditional statistical dependencies on one task by its neighbours. When learning representations from historical data, the direction of time for learning these statistical dependencies can be in either direction.

If *n* tasks Tₐ₁, Tₐ₂, ..., Tₐₙ, belong to an indexed matrix Sₐ within a schedule, any statistical dependencies between the tasks are captured using *recurrent neural network* architectures, such as *long short-term memory unit* or *gated recurrent unit* variants. While the vectors Tₐ₁, Tₐ₂, ..., Tₐₙ would comprise the inputs to the recurrent neural network, the outputs can be trained according to the chosen optimisation problem. If associated task outcomes are Rₐ₁, Rₐ₂, ..., Rₐₙ are used, then the network is trained to predict outcomes from sequences. If neighbouring task vectors are used then the network (for example Tₐ₁₊₁, Tₐ₂₊₁, ..., Tₐₙ₊₁ using an offset of 1) is trained to predict past or future sequences.

### Learning to predict outcomes from sequences

A sequence, plus optionally its single-vector encoding, can be used to predict outcomes or values associated with it (e.g. total duration change). If a recurrent neural network is trained to predict outcomes based on a sequence of tasks, then it characterises the probability distribution p(Rₐᵢ | Sₐ), which denotes the probability density function of the ith outcome *given* a sequence of tasks Sₐ.

The architecture can be modified to predict a single outcome vector r from task sequences by training a recurrent neural network, treating its output as a latent state vector Hₐ. This vector is passed as an input to a downstream sub-architecture, that may comprise of one or more dense layers. The composite recurrent neural network architecture is trained on historical data and optimised to characterise the probability density function p(r | Sₐ), which can then be used to predict specific outcomes on the basis of prospective data.

### Learning to predict sequences from sequences

Task sequences Sₐ can be predicted from neighbouring task sequences S_{aw} given a specified index offset *w,* which may be 1 or greater. As described previously, a recurrent neural network receives input vectors Tₐ₁, Tₐ₂, ..., Tₐₙ to output a latent state vector Hₐ.

This latent state vector Hₐ is then used as an input to one or more recurrent networks whose sequential outputs are used to predict the neighbouring sequence T_{a1+w}, T_{a2+w}, ..., T_{an+w}. The direction of time represented for the additional networks need not be identical, and need not correspond to that used for the input recurrent neural network.

The *sequence-to-sequence* architecture described above represents a deep recurrent *autoencoder* model that characterises the probability density function p(S_{aw} | Sₐ). The input recurrent network component trains variables within the *encoder* component of the architecture that are not necessarily independent of the variables trained within the *decoder* component(s). Inputs to- or outputs from- one or more *decoder* component can also be passed as an input to a downstream sub-architecture, that may comprise of one or more dense layers. If the final dense layer is used to predict a single outcome r, the composite recurrent neural network architecture can be trained on historical data and optimised to characterise the probability density function p(S_{aw},r | Sₐ). Since this joint probability distribution includes outcome predictions, the method can be used to predict the permutation of task sequence S_{aw} that optimises the outcome.

### Learning to complete gaps in tasks

Given a description of a potential task, it is possible to infer its most likely vector representation, even in the presence of gaps. This is achieved by initially substituting the missing inputs with null-values, and obtaining an initial vector representations Tₓ. A neighbourhood, limited by a distance d, is defined around Tₓ, to obtain a collection of tasks T_{i..}Tₙ such that | Tₓ - Tᵢ | < d. The collection of tasks in the neighbourhood is then used to infer the correct values for the missing null-values in the original vector, by use of the mean or other statistical methods.

### Learning to generate schedules

If a list of partially described tasks is provided, in any given order, it is then possible to first complete the gaps in the tasks, and subsequently predict the correct ordering of the tasks therefore generating a schedule hypothesis Sₕ which can the be evaluated. Multiple hypotheses can be generated and further evaluated so as to select the one with the best outcomes.

### Communicating probabilistic predictions of progress

With predictions generated from our engine, the output of the Monte Carlo simulation should be displayed to the end user. Given the predictions of the simulation - on a task, milestone and work-breakdown-structure level - we visualise the likelihood of each individual element within a schedule. This probabilistic prediction on an individual task level is visualised using a histogram, where each bucket of the histogram represents a time-dimension prediction of the task, and the height of the histogram the probability by which this outcome will occur. An example is shown in **Figure 9****.**

### Highlighting the impact of activities on a schedule

The predictions from the Monte Carlo simulations allow us to understand where risk is carried across the schedule at an activity, milestone or work-breakdown-structure level. A common practice in construction is to visualise the sequence of work breakdown, the activities within the structure, and the milestones which correspond to the activities - this is frequently done using a *Gantt chart.* By overlaying our simulation predictions onto a *Gantt chart* view, the impact each individual activity has upon an entire schedule may be highlighted, e.g. using colour and distinctive shapes. A Gantt chart may indicate the critical path (the activities in a schedule which must be executed on time to avoid causing delay), whereas we may highlight risk on an individual activity basis. An example is shown in **Figure 10****,** in which a high risk is indicated for Activity 2 and Activity 3, by showing their corresponding bars on the Gantt chart in black, and a lower risk is indicated for Activity 1 and Activity 4, by showing their corresponding bars on the Gantt chart in white.

### Understanding how risk is distributed across a portfolio of projects

With our predictions made on a range of schedules, we are able to make aggregated estimations of an entire portfolio of projects. We are able to communicate the projects which are predicted to cause significant delays; highlight specific milestones for the attention of project directors and board-level executives; and make projections about . how project execution may manifest in the future.

### Communicating the evolution of risk over time on a project

With predictions made on a project, as the project enters a phase of construction (or *execution),* the status of the schedule is measured - actual delivery rates are logged in updated iterations of a schedule. With the actual rate of progress, and our simulated results from Monte Carlo, projections are made to estimate the future progress of projects. The rate of *actual progress* of the project (up to the actual completion date) is 5 plotted against the rate of *planned progress* (to the planned completion date), while the outcomes of our predictions are plotted on other curves and are configurable by a user to define a specific probability likelihood. An example is shown in **Figure 11****.** In **Figure 11****,** P25 is the projection completion (%) curve for a 25% probability, P50 is the projection completion (%) curve for a 50% probability, and P98 is the projection completion (%) curve for a 98% probability. The user interface is arranged to receive a user selection of a probability value, and to display the projection completion (%) curve corresponding to the selected probability value. Selection of the probability value may be performed by selecting an icon eg. a "+ Add" icon.

### 5 Communicating the most impactful projects in a portfolio

With predictions made for pre-construction and execution phase projects, we are able to estimate the risk distribution of a portfolio of projects. By bucketing the likely duration of an entire project, we are able to estimate how likely a project will be to finish in defined time ranges. Using a Heatmap-style graphical representation, the y-axis indicates the project, and the x-axis shows a range of project completion outcomes. The opacity of each tile, or a numerical value associated with each tile, reflects how likely the outcome is to occur. **Figure 12** shows an example of a heatmap-style graphical representation of how likely a project will be to finish in defined time ranges.

### Using risk as a method for validating construction plans

By quantifying and pinpointing the actual systemic risk of a construction programme, an automated process can be produced that validates or rejects a programme by comparing the risk profile to a predefined set of parameters. Such a method can be used during the creation of a programme, so that no plan goes into action if the identifiable risk exceeds a threshold, e.g. by checking that the inter-quartile date range of a set of simulations is below a preset limit.

### Attribution of risk responsibility to tasks

Attribution of risk responsibility to a task is represented by an expected impact of a single task, divided by the total sum of all expected impacts of all tasks in a schedule. This can be expressed as a percentage and can be calculated for example for task T_k by using the expectation of the task impact distribution TI_k calculated above, RF_k = E[TI_k] / sum(E[TI_i]). This can be directly interpreted as the percentage carried by task T_k of the total time risk of the project. The direct effect that using a measure like this can have is to immediately highlight the usually small set of tasks in a project that have a true effect on the completion of the project, allowing for mitigating measures, addition of resources, or replanning, for example.

### FURTHER DETAILED DESCRIPTION

According to an aspect, there is provided a system for modelling a construction project comprising a plurality of tasks, the system comprising:
an input for receiving task information;
an output for outputting information relating to a schedule of the tasks, the tasks being ordered in the schedule; and
a processor configured to:
   obtain task information corresponding to each task, the task information comprising: information identifying the type of task, information relating to the planned task duration, and information relating to any relationships to one or more other tasks;
   generate a plurality of task vectors, each task vector corresponding to one or more tasks, using a first trained algorithm taking the task information corresponding to the one or more tasks as input, such that each task has a corresponding task vector;
   for each task vector, generate information relating to a predicted duration time for the one or more tasks using a second trained algorithm, taking the task vector as input;
   generate information relating to a predicted schedule duration time using the information relating to the predicted duration times.

The information relating to any relationships to one or more other tasks may comprise the number of other tasks having a relationship to the current task. The information relating to any relationships to one or more other tasks may comprise combined task information relating to the other tasks.

In an example, the information relating to a predicted duration time comprises a probability distribution. The probability distribution may relate to the relative increase in duration time.

In an example, the information relating to a predicted schedule duration time comprises a probability distribution. In an example, the information relating to a predicted schedule duration time comprises a predicted schedule duration time value.

Generating the information relating to a predicted schedule duration time may comprise:
sampling the probability distribution relating to each task vector a plurality of times, to generate a plurality of duration values corresponding to each task vector;
applying the duration values to the schedule to generate a plurality of duration values corresponding to the schedule.

In a further example, an impact of the one or more tasks corresponding to a task vector is determined by:
sampling the probability distribution relating to the task vector a plurality of times, to generate a plurality of duration values corresponding to the task vector;
applying the duration values to the schedule to generate a plurality of duration values corresponding to the schedule.

The impact of the one or more tasks corresponding to each task vector may be determined.

In a further example, the processor is further configured to:
for each task vector, generate information relating to an impact on the schedule duration time using a third trained algorithm, taking the task vector as input.

For a task where information identifying the type of task, information relating to the planned task duration, and/or information relating to any relationships to one or more other tasks comprises a null value:
a task vector may be generated using the first trained algorithm;
a plurality of other task vectors in the schedule which are similar to the task vector identified;
task information for the other task vectors corresponding to the information comprising a null value for the task vector identified;
task information for the task vector generated using the task information for the other task vectors;
and an updated task vector may be generated for the task using a first trained algorithm taking the task information as input.

In an example, the first trained algorithm also takes the task information corresponding to one or more other tasks related to the one or more tasks as input. The task information corresponding to one or more other tasks may be combined into a fixed length vector, which is combined with the task information for the current task.

In an example, the task vectors correspond to two or more tasks. The number of tasks corresponding to a task vector may be defined by a fixed window size, and wherein the task information corresponding to the tasks is combined into a one-dimensional vector for input to the first trained algorithm.

The first trained algorithm may be the encoder part of a neural network based auto-encoder.

The second trained algorithm may comprise a plurality of neural networks, and wherein the information relating to a predicted duration time is generated by combining the output of the plurality of neural networks.

According to another aspect, there is provided a method for modelling a construction project comprising a plurality of tasks, the method comprising:
obtaining task information corresponding to each task, the task information comprising: information identifying the type of task, information relating to the planned task duration, and information relating to any relationships to one or more other tasks;
generating a plurality of task vectors, each task vector corresponding to one or more tasks, using a first trained algorithm taking the task information corresponding to the one or more tasks as input, such that each task has a corresponding task vector;
for each task vector, generating information relating to a predicted duration time for the one or more tasks using a second trained algorithm, taking the task vector as input;
generating information relating to a predicted schedule duration time using the information relating to the predicted duration times, the tasks being ordered in the schedule.

According to another aspect, there is provided a method of training a system for modelling a construction project comprising a plurality of tasks, using a training dataset comprising a plurality of tasks and information relating to the actual duration times for one or more tasks, the method comprising:
obtaining task information corresponding to each task in the training dataset, the task information comprising: information identifying the type of task, information relating to the planned task duration, and information relating to any relationships to one or more other tasks;
training a first algorithm to generate task vectors, using the task information;
generating a plurality of task vectors, each task vector corresponding to one or more tasks, using the first trained algorithm taking the task information corresponding to the one or more tasks as input, such that each task has a corresponding task vector;
for each task vector, generating information relating to a predicted duration time for the one or more tasks using a second trained algorithm, taking the task vector as input;
training the second algorithm using the actual duration times.

The method may further comprise:
sampling the probability distribution relating to the task vector a plurality of times, to generate a plurality of duration values corresponding to the task vector;
applying the duration values to the schedule to generate a plurality of duration values corresponding to the schedule;
determining an impact of the one or more tasks corresponding to the task vector;
training a third algorithm to generate impact information, using the determined impact.

According to another aspect, there is provided a system trained according to any of the above methods.

The methods are, or include, computer-implemented methods. Since some methods in accordance with examples can be implemented by software, some examples encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

According to an example, there is provided a carrier medium comprising computer readable code configured to cause a computer to perform any of the above methods.

Construction projects comprise a plurality of tasks, which may be ordered into a schedule. The schedule is used to manage the project, and in particular the project time scale. Project schedules are typically based on start and end times which are estimated by a person for each task, meaning that the project time scale may be inaccurate.

In an example, there is provided a quantitative method of modelling a construction project, in which tasks are represented by task vectors. The task vectors are generated using a first trained algorithm, which takes task information from the schedule as input. Each task vector corresponds to one or more tasks. The task vectors can then be used to generate information relating to a predicted duration time for the one or more tasks, using a second trained algorithm. Information relating to the predicted schedule duration time can then be generated.

The first trained algorithm and second trained algorithm are trained on actual project data, comprising the scheduled start and end times of each task, and the actual duration of each task when the project was undertaken. In this way, predicted task and schedule duration times can be generated for a new schedule. This may allow more accurate prediction of time scales for example.

In an example, the impact of a specific task on the project end date may also be determined.

In an example, the impact of the ordering of tasks on the schedule outcome is taken into account, by including information relating to the surrounding context of the input task in the task information.

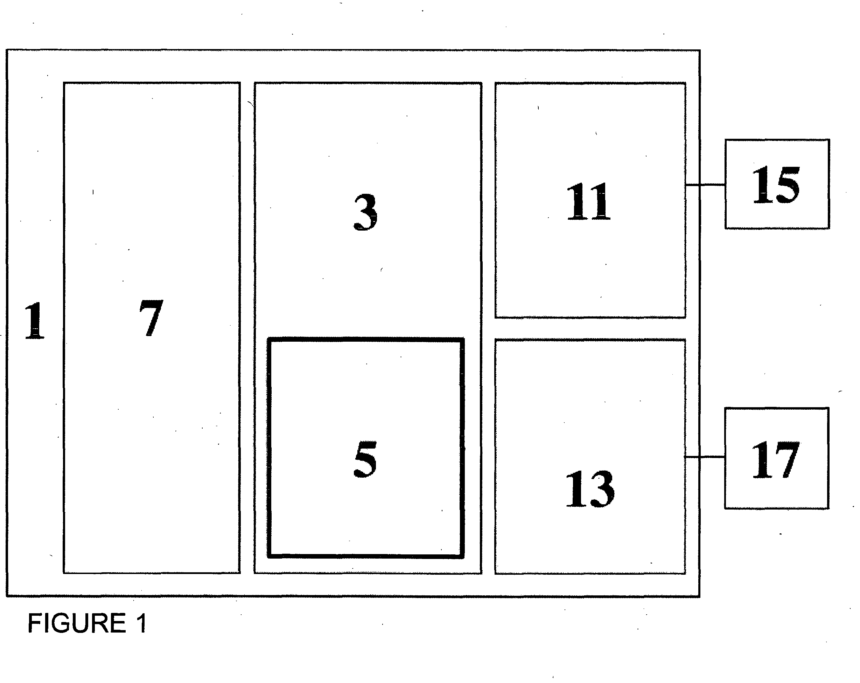

**Figure 1** shows a schematic illustration of an example system for modelling a construction project 1 in accordance with an example.

The system 1 comprises a processor 3 which takes input task information and outputs information relating to the schedule. A computer program 5 is stored in non-volatile memory. The non-volatile memory is accessed by the processor 3 and the stored code is retrieved and executed by the processor 3. The processor 3 may comprise logic circuitry that responds to and processes the instructions in the stored code. The storage 7 stores data that is used by the program 5.

The system 1 further comprises an input module 11 and an output module 13. The input module 11 is connected to an input 15 for receiving the task information. The input 15 may be a receiver for receiving data from an external storage medium or a network. Alternatively, the input 15 may read data from a stored file, which may be stored on the system or on a separate storage medium such as a floppy disk, a CD ROM, a magnetic device or a programmable memory device. Alternatively, the input may comprise input hardware such as a keyboard or microphone for example.

Connected to the output module 13 is output 17. The output 17 may comprise a transmitter for transmitting data to an external storage medium or a network. Alternatively, the output 17 may write data in a stored file, which may be stored on the system or on a separate storage medium such as a floppy disk, a CD ROM, a magnetic device or a programmable memory device. Alternatively, the output may comprise output hardware such as a display for example.

In an example, the components of the system 1 may be located in a common system with hardware for inputting and outputting data. Alternatively, the system 1 may be a remote system 1, which receives and transmits data. For example, the system may be implemented on a cloud computing system, which receives and transmits data. Although in the described system, a single processor 3 located in a device is used, the system may comprise two or more remotely located processors configured to perform different parts of the processing and transmit data between them for example.

In use, the system 1 receives data through data input 15. The program 5, executed on processor 3, outputs data through the output 17 in the manner which will be described with reference to the following figures.

**Figure 2(a)(i)** shows a flow chart illustrating a method for modelling a construction project according to an example. **Figure 2(b)** shows the steps of the flow chart in a different level of detail.

In step S201, a schedule, comprising a plurality of ordered tasks is inputted. The schedule comprises data corresponding to each task. The schedule data may be in XER, XML or PP file format for example. **Figure 2(a)(ii)** shows an example schedule, in schematic form. Each task in the schedule comprises related data. The data may comprise text information, numeric information, date information, lists, categories etc. **Figures 2(a)(iii) and 2(a)(iv)** show example schedule data, comprising the task property data. The specific data will be described in further detail below.

In step S202, an input reader module takes the input project schedule (where input schedules may be in various file formats for example). Homogeneous task information is generated to be used as an input to the next processing stages. The task information comprises a plurality of task features. The same features are extracted for each task.

From the schedule, a plurality of task features F₀ ...F_{N} are generated for each task, which comprise: information identifying the type of task, information relating to the planned task duration, and information relating to any relationships to one or more other tasks. The reader reads properties relating to the task from the schedule, and then this is converted into numeric features.

If the reader cannot read a property from the schedule, it assigns a null value for example.

Thus the information identifying the type of task, information relating to the planned task start time and end time, and/or information relating to any relationships to one or more other tasks may comprise a null value for example.

Step S202 may comprise two steps, a first step S202a in which task properties are read from the schedule in a mixed-type format, and a second step S202b in which the task property data is converted to numeric data, using one or more forms of numeric encoding for example. Where the task property data read by the reader is numeric data however, the numeric feature may be output directly from the reader, without requiring any further conversion step S202b. The task features correspond to numeric data representing properties of the task. Thus for a task i, the task features are in the form ${F}_{i} = \left[\begin{matrix}{F}_{0} \\ ⋮ \\ {F}_{n}\end{matrix}\right]$ , where each Fₙ corresponds to a task feature extracted from the schedule for task i.

As described above, if the reader cannot read a feature property from the schedule, it assigns a null value in S202a. This propagates through the numeric encoding performed in S202b, resulting in one or more null values in the numeric feature vector.

The property data extracted by the reader from the schedule for each task i in step S202a may comprise an in-memory object containing text, lists of numeric properties and relationships between tasks. The property data may comprise a mixed-type tuple, the contents of which depend on the task information in the schedule. In S202b, this data is converted to numeric information, using some form of numeric encoding. Thus each property of a task i is represented using some form of numeric encoding, so that the features for a particular task i form a numerical vector.

The information identifying the type of task may comprise information relating to a task name for example. An example of the task name may be "excavation in zone 9". The task name may for example be the "label" used by a planner when constructing a schedule. The free-text information identifying the type of task read from the schedule by the reader in S202a is then converted into numeric information in S202b. Any method may be used for this encoding, for example bag of words, tf-idf or word2vec. Any numeric encoding method suitable for converting free text into numeric data may be used. The information identifying the type of task may comprise numeric information relating to a task name. The numeric information is included in the vector Fᵢ.

The information relating to the planned task duration may comprise information relating to the planned start and end dates for example. The information may be read by the reader in date format, represented by the language in which the algorithm is implemented for example, in S202a. The date information is then encoded into numeric information, for example using bag of word, tf-idf or word2vec based methods. Any numeric encoding method suitable for converting free text into numeric data may be used. The information relating to the planned task duration may comprise numeric information relating to the planned start and end dates for example. The numeric information is included in the vector Fᵢ.

The reader may further extract information relating to any relationships to one or more other tasks, for example information identifying predecessor tasks and successor tasks, for example a list of memory references to predecessor tasks and successor tasks. Alternatively, task IDs of the predecessor tasks and the successor tasks may be used.

A predecessor task is a task on which the current task explicitly depends and successor task is a task which explicitly depends on the current task. The dependencies may already be encoded in the schedule, for example, each task in the schedule may have a list of predecessors and successors associated with it. For example a task for "roofing" would likely have an explicit dependency on the completion of the walls, and therefore the "roofing" task may have an associated list of predecessor tasks, which includes the "walls" task. The reader reads this list in S202a and generates information for the "roofing" task comprising, for example, an ID of the "walls" task or a memory reference to the "walls" task. Further "layers" of tasks may be considered, and information about tasks in further dependent layers may be read. For example, three layers of dependency includes the predecessor tasks, the predecessor's predecessor tasks, the predecessor's predecessor's predeccessor tasks, the successor tasks, the successor's successor tasks, and the successor's successor's successor tasks. The number of layers of dependency to be taken into account may be defined.

In an example, the reader extracts information identifying a fixed number of predecessor and/or successor tasks working outwards through the layers (i.e. taking tasks from the first layer, second layer etc until the fixed number is reached). For example, the reader may identify three predecessor tasks and three successor tasks in step S202a, working outwards through the layers until three tasks are identified, generating a list of task IDs for the three predecessor tasks and three successor tasks read. In step S202b, the numerically encoded task information relating to the three predecessor tasks and three successor tasks is retrieved. It is noted that this information comprises the information relating to the tasks themselves such as the information relating to the type of task for the three predecessor tasks and three successor tasks and the information relating to the planned task duration for the three predecessor tasks and three successor tasks. It does not comprise the information relating to any task relationships for the three predecessor tasks and three successor tasks themselves. The numerically encoded task information for the fixed number of predecessor tasks and/or successor tasks is then combined with the numerically encoded information for the current task, for example by concatenating the information in S202b. Where the current task does not have the specified fixed number of predecessor and/or successor tasks in all the layers, a null value may be used.

Alternatively, the extracted information relating to any relationships to one or more other tasks may comprise information identifying all predecessor and successor tasks in a defined number of layers, for example a list of immediate predecessor tasks and a list of immediate successor tasks (the first layer), being tasks on which it depends and tasks that depend on it respectively. This extracted information is then converted to numeric information in S202b by generating one or more fixed-length numeric features, for example one or more of: the length of the list, one or more average values, exponentially-decaying weighted average values, etc.

For example, the reader may identify all the predecessor tasks and/or successor tasks in a defined number of layers in step S202a, generating a list of tasks IDs. In step S202b, the numerically encoded task information relating to the predecessor tasks and successor tasks is retrieved. Again, this information comprises the information relating to the tasks themselves such as the information relating to the type of task for the predecessor tasks and/or successor tasks and the information relating to the planned task duration for the predecessor tasks and/or successor tasks. It does not comprise the information relating to any task relationships for the predecessor tasks and/or successor tasks themselves. The numerically encoded task information for the predecessor tasks and/or successor tasks is then combined in S202b, for example by taking the average value of each feature, or an exponentially weighted average value for each feature (where the weighting decreases exponentially through the layers). For example, average values for all the predecessor tasks and average values for all the successor tasks may be determined. These values are then concatenated with the numerically encoded task information for the current task. In this way, fixed length features may be generated even where there is a different number of predecessor and/or successor tasks for each task. Alternatively, the number of predecessor tasks and/or the number of successor tasks may be used for example.

Thus for a task i, the task features are in the form ${F}_{i} = \left[\begin{matrix}{F}_{0} \\ ⋮ \\ {F}_{n}\end{matrix}\right]$, where each Fₙ corresponds to a task feature extracted from the schedule for task i. The Fₙ may comprise: numerically encoded information identifying the type of task encoded, numerically encoded information identifying the planned start and end dates, the number of successor tasks and the number of predecessor tasks for example.

The reader may further extract information relating to related work breakdown structure (WBS) elements in S202a. The work breakdown structure is a form of encoded hierarchy information in the schedule, where the tasks are assigned to a group (e.g. "3rd Floor"), which can itself be assigned to a "parent" group (e.g. "Building A"). The work breakdown structure elements corresponding to a task are the tasks in the same group for example. The groups are defined in the schedule. Each WBS may be a separate table in the schedule, and each task may have explicit links to the WBS group to which it belongs.

For each task, the reader reads the other tasks in the group in S202a, and generates information representing the other tasks in the group, for example task ID numbers or memory references to the other tasks. For example, a list of physical in-memory references or a list of task IDs automatically assigned by the software used to create the schedule may be read in S202a. This extracted information is then converted to numeric information in S202b by generating one or more fixed-length numeric features, for example the length of the list, average values, weighted average values etc as has been described above. The task features may thus further comprise the number of tasks in the work breakdown structure group for example.

The task information may further comprise any resource allocations to the task for example. The task information may further comprise any quantity related information allocated to the task, for example, "number of pylons to be built" or "cubic metres of concrete to be poured".

Any task feature Fₙ may be included in the task information, provided it exists in the input schedule, can be inferred from the information in the input schedule, or can be replaced by a token representing a null value, for all tasks in a'schedule.

The task information extracted in S202 for each task thus comprises a plurality of task features extracted from the schedule data for the task. The reader extracts the information from the schedule and this information is transformed to a numeric vector in S202. A numeric vector of length N is outputted from this step.

The next step S203 is referred to as the task transformation stage. **Figures 3(a)** **and** **3(b)** show the transformation of the task information comprising the extracted task features into the task vector in more detail. In the task transformation stage, a translator module converts tasks from different schedule contexts into a single multi-dimensional vector space.

The input to step S203 for a task is the list of the task information features, i.e. a numeric vector, generated in S202.

In step S203, the output of S202 for the task is inputted into a first trained algorithm. Each task in the schedule has a corresponding vector of length N. A matrix of dimension MxN may be generated corresponding to the entire schedule, where each row m corresponds to a different task (where the schedule comprises M tasks), and each column n corresponds to a different feature. Each task may be processed separately however, so that the input to the first trained algorithm comprises a vector of length N corresponding to each task. M inputs are inputted for the schedule.

In S203, a task vector corresponding to each task is generated, using a first trained algorithm taking task information corresponding to the task as input. The output of the first trained algorithm in S203 is a task vector representing the task Tᵢ ∈ R^{L}. The task vector Tᵢ is of arbitrary dimensionality, and the dimensionality is defined during the training stage, described later. The output task vector may be referred to as a universal vector . In an example, for a task i, the task vector has the form ${T}_{i} = \left[\begin{matrix}{T}_{0} \\ ⋮ \\ {T}_{L}\end{matrix}\right]$, where each

T₁ is an entry in the task vector. This is an example representation of a task in numerical vector form. A matrix of dimension MxL can be generated, corresponding to the entire schedule, where each row m corresponds to a different task, and each column l corresponds to a different feature in the task vector. However, each task may be input to the first trained algorithm separately, and the output matrix of dimension MxL populated one task at a time for example, as described above.

In an example, the first algorithm comprises the encoder "half" of an auto-encoder, for example a deep auto-encoder. An auto-encoder is a type of neural network with a bottleneck layer, that during training learns to represent at its output the same data it receives as input (or a subset of it) whilst transmitting information through the bottleneck layer. The bottleneck layer is the smallest layer in the network, and has a lower number of neurons than the inputs. This is then used as the output layer of the first trained algorithm during operation. The first trained algorithm may be trained using data from historical schedules. The training stage will be described in further detail below.

In one example, as well as the task information corresponding to the current task, task information corresponding to other tasks in a surrounding context is also taken as input.

In this example, it is first identified from the task information corresponding to the current task which tasks are in the surrounding context. In an example, the surrounding context comprises the immediate predecessor tasks and the immediate successor tasks.

The task information (i.e. the numeric vector Fᵢ relating to each task i in the surrounding context) relating to the predecessor and successor tasks is then retrieved. This information is then combined into a fixed length numeric vector, which is combined with the task information for the current task. For example, an average of the features of the vectors of predecessor task information and an average of the features of the vectors of successor task information are taken, these values are concatenated, and this in turn is concatenated with the vector of the current task information.

Alternatively a fixed "maximum window" for the predecessor and successor tasks may be used, such that for each current task, a fixed number of successor and predecessor tasks are included, and the information for these tasks concatenated with the information for the current task.

A number of different ways of combining the task information to produce a fixed size input to the encoder may be used.

Presenting data from multiple tasks at the same time means that the first trained algorithm can use information about the surrounding context of each task, and how to represent it with respect to its related tasks.

In an example, further "layers" of tasks may be taken as input. A "window" may be defined to represent the number of layers. For example, a window value of 3 would take as input tasks in the surrounding three layers of dependency (i.e. the predecessor tasks, the predecessor's predecessor tasks, and the predecessor's predecessor's predeccessor tasks, and the successor tasks, the successor's successor tasks, and the successor's successor's successor tasks). A surrounding context may therefore be defined as all other tasks in the same schedule that have a temporal or logical connection with the current task, according to a window size parameter W. An example of a logical connection would be a roof depending on wall, since the roof cannot be built before the wall. This connection is also temporal. Landscaping the garden before painting the walls on the other hand would be only temporal (as encoded in the schedule).

When W=0, the surrounding context is empty and no additional tasks are included. When W=1, only direct predecessors (and successors) of the current task are included in the surrounding context. When W=2, the predecessor and the predecessor's predecessor tasks (and successors and successor's successors tasks) will be included, and so forth. If a task has a number of predecessors/sucessessors smaller than W, only those predecessors/sucessors will be included. The task information (i.e. the numeric vector Fᵢ relating to each task i in the surrounding context) is then retrieved. This information is then combined into a fixed length numeric vector as described above, which is combined with the task information for the current task. For example, an exponentially decaying weighted sum of the features of the vectors of predecessor task information and an exponentially decaying weighted sum of the features of the vectors of successor task information is taken, these are concatenated, and this in turn is concatenated with the vector of the current task information.

The encoder thus comprises a neural network. The encoder comprises the "encoder" half of the auto-encoder, namely the layers from the input layer through to and including the bottleneck layer. The bottleneck layer forms the output layer. Each node in the bottleneck layer outputs a value, which corresponds to a value in the output task vector. Of course, other layers in the auto-encoder could be used as the output layer, for example, the encoder neural network may comprise the layers from the input layer through to and including the layer before the bottleneck layer or the layer after the bottleneck layer.

**Figure 3(a)** shows an example of the transformation from the task information read by the reader in S202a to the task vector outputted from S203. the encoder is used to perform an embedded space transformation of the task. **Figures 3(b)** **and** **3(c)** show a schematic illustration of a simplified example encoder neural network, comprising 7 inputs and 3 layers, with the bottleneck output layer having 2 neurons (and thus the task vector having two entries). The number of inputs depends on the number of task features extracted by the reader in S202 (and the size of any additional surrounding context features if included). In an example, the neural network has 100,000 input neurons and 1,500 output neurons in the bottleneck layer, with an intermediate layer that varies between 10,000 and 50,000 neurons.

The input task information (corresponding to the current task, and optionally one or more tasks in the surrounding context) output in vector form from S202b is inputted into the encoder neural network in S203. Each node in the input layer computes a weighted sum of all of its inputs (being each of the features in the task information) and an additive bias term, and then applies an activation function to the result. The outputs of each layer are then fed as the inputs to the subsequent layer. Each node in the hidden layer again computes a weighted sum of all of its inputs (being the outputs of each node in the previous layer) and an additive bias term, and then applies an activation function to the result. In an example, the activation function is a sigmoid: S(x) = 1/(1 + e^{-x}). Each node in the final layer outputs a value into the task vector. The weights and biases are the trainable parameters, the values of which are learned during the training stage (described later). The task vectors output from the output bottleneck layer have the same dimension as the number of output nodes.

In an example, the latent (or embedded) space in which the task vector **Tᵢ** lives is a space in which similar tasks are represented by similar vectors. Thus if **| Tₐ - T_{b}** | < **| Tₐ - T_{c} |,** then Tₐ is more similar to T_{b} than T_{c} is similar to Tₐ.

Moreover, in an example, if **T_{a,x1}** represents task A in location X1, **T_{a,x2}** represents task A in location X2, and **T_{b,x2}** represents task B in location X2, then the resulting vector of **T_{a,x1}** - **T_{a,x2}** + **T_{b,x2}** will be similar to the representation of task B in location X1. This is known as the transferrable inference property. **Figure 4(a)** shows a schematic illustration of a 2-dimensional representation of a neighbourhood of **Tₐ.** **Figure 4(b)** shows a schematic illustration of a 2-dimensional representation of the transferrable inference property. This property demonstrates that the transformation of the task information to the task vector represents the tasks based on some generic knowledge, allowing further learning using the task vectors to be performed.

Thus S203 outputs a task vector **Tᵢ** corresponding to each task i in the schedule. In the subsequent stages, these numerical representations of the tasks are used to model the project and predict the schedule timings.

In S204, the task vector **Tᵢ** for each task i in the schedule is inputted into a second trained algorithm. The second trained algorithm is referred to as the "Inference Engine" in **Figure 2(a)(i).** For each task vector, step S204 comprises generating information relating to a predicted duration time for the task using a second trained algorithm, taking the task vector as input. The second trained algorithm may be a "regression" type algorithm or a "classification" type algorithm. For a regression type algorithm, the information relating to a predicted duration time for the task may be a predicted duration time value for example. For a classification type algorithm, one or more probability values may be generated corresponding to various duration times for example.

In the described example, the information is a probability distribution of a relative task duration time increase. In general, in S204, the second trained algorithm may generate new predictors for probabilities of outcomes identified during training. The outcome may be a relative duration increase for example, as described below.

In an example, for a particular task, S204 comprises generating a probability that there is a relative increase in the task duration corresponding to each of a plurality of ranges.

The relative increase in task duration Rᵢ is the actual duration divided by the planned duration, which may be expressed as a fraction or percentage for example. The durations may be in calendar hours for example. The result is the actual relative increase in work time for the task. In an example, the possible values of Rᵢ are divided into a number of ranged "buckets". A classifier-type second algorithm is then used to predict a probability value for each of the ranges based on the input task information. The second algorithm is trained to learn this classification. The training stage will be described later. Once trained, the second algorithm is able to predict the probability P(**Rₖ** | **Tᵢ**) for every outcome range R_{K} for an input task vector Tᵢ.

The second trained algorithm may also be referred to as the "duration prediction model". The second trained algorithm may comprise a plurality of neural networks for example. In an example, the second trained algorithm comprises 20 1-layer classifier type Artificial neural networks (ANNs) with 1024 neurons in the hidden layer. The average value for each range from the plurality of neural networks may be taken, using for example the AdaBoost algorithm, and used as the output. For example, the average value corresponding to each outcome range may be taken, and the output information relating to a predicted duration time corresponds to the average values corresponding to each range. A normalisation function may be included at the output layer, to generate probability values from the output values.
**Figure 5(a)** shows a schematic illustration of the operation of the duration prediction model. It shows a prediction model operating on a task input. **Figure 5(a)** shows an example probability distribution outputted for an input task, being an example of the distribution over Rₖ that would be seen as output from the model. The distribution comprises a probability value corresponding to each relative task duration increase range. In **Figure 5(a)****,** an input matrix showing the N task features for M tasks is shown. An output matrix showing the probability value corresponding to each range is shown. Each task is input separately, and the output probability information used to populate the output matrix.
**Figure 5(b)** shows an example output probability distribution in more detail. It comprises a probability value corresponding to each of six ranges. The six ranges are: 0 - 0.5, 0.5 - 0.9, 0.9 - 1.1, 1.1 - 1.5, 1.5 - 2.0, and >2.0. The probability distribution comprises a value of 0.1 corresponding to the first range, 0.15 for the second, 0.08 for the third, 0.4 for the fourth, 0.17 for the fifth and 0.1 for the sixth. The probability values across the ranges sum to 1.

In this example, S204 outputs a probability distribution corresponding to each task, which may be a vector of probability values, where each entry in the vector corresponds to a range of relative task duration increase.

In S205, each task duration probability distribution is sampled, to generate new task durations from the distribution. Thus, once the distributions of duration outcomes have been generated in S204, these are included in a simulation based on random sampling in S205.

In an example, the distribution over Rₖ for a task is used to randomly sample task outcomes in two stages. In the first stage, a random weighted sample is taken from the probability distribution, and the bucket (range) in Rₖ in which the sample would fall is identified. In stage 2, a sample is then taken from a uniform distribution between the upper and lower boundaries of the bucket (range). This second sample is used to calculate a new predicted actual duration of the task (using the original planned duration and the value of the sample, which is the relative increase of the original planned duration).

In S205, the sampling process is performed multiple times for each task. Monte Carlo sampling is used, whereby samples are drawn at random from the probability distribution. S205 comprises repeatedly sampling new durations for each task in the schedule. The above stages 1 and 2 are therefore performed multiple times for each task in the schedule. S205 therefore outputs a plurality of new adjusted durations corresponding to each task in the schedule.

Next, the projected end date of the schedule is recalculated in S206. A distribution of possible outcomes for the schedule is generated from the plurality of durations corresponding to each task in the schedule output from S205. In this step, the distribution of the final schedule outcome is generated, by applying the new sampled durations to the entire schedule, with constraints. The constraints may comprise the schedule order (e.g. maintaining the predecessor/successor relationships), for example if a task is delayed, the start date of a successor task will have to be moved forward.

Thus, in step S205 a predicted duration value for every task in the schedule is calculated by sampling from the probability distribution. All the new durations are then applied to the schedule in S206, moving all the task start dates according to the predecessor/successor dependencies. This results in a new end date for the schedule. These steps are repeated a number of times to create a distribution of end dates for the scheduling, the result of the Monte Carlo simulation.

Steps S205 and S206 thus comprise generating a probability distribution for the predicted schedule duration time using the probability distributions of the predicted task duration times. In these steps, a simulator uses the probabilities generated by the predictors to obtain a probability distribution for the final outcome of the project.

In S207, a schedule outcome prediction is outputted. This may comprise the probability distribution for the predicted schedule duration time generated in S206 for example. It may comprise the most likely predicted schedule duration time determined from the distribution, for example a mean value or median value.

In an example, further information may optionally be generated and outputted in S208. For example, the simulator may use the probability distributions generated by the predictors to obtain the relative impact of each task to the outcome. In an example, the impact of a specific task on the project end date may be determined. The impact of a single task on the end date of the schedule project may be determined using the following procedure.

The sampling described in S205 is performed for a task, to give a sampled outcome Oᵢ (being a task duration value) for the task. The end date of the project is recalculated based on the new duration and corresponding new adjusted end date of the task. Constraints may be applied as described above (for example moving start dates based on predecessor/successor relationships) The durations of the other tasks are not adjusted (although the dates may be adjusted based on the new end date of the task and the relationships). The delay caused to the whole project by the task is recorded.

These steps are repeated multiple times for the same task. The cumulative record of all end dates represents a distribution of the impact that the task will have on the end date of the project. A task could, for example, overrun by 20 times its original duration, and have no effect on the end date of the project because no other tasks depend on it.

Repeating this procedure for every task allows the tasks to be sorted by impact and therefore allows a determination of the most important tasks in a schedule. For example, the tasks may be sorted by the mean value of the probability distribution of the schedule end date corresponding to the adjusted task.

Thus in S208, a value for the predicted duration for a single task in the schedule is determined by sampling from the probability distribution. The same sampled values generated in S205 may be used, avoiding repetition of this step. The new duration is then applied to the schedule, moving all the task start dates according to the predecessor/successor dependencies, but not adjusting the durations of the other tasks. This gives a new end date for the schedule. This process is repeated a number of times for the task to create a distribution of end dates for the schedule based on the updated task. The impact of the task may be the mean value of this distribution for example. This may be repeated for each task, allowing the tasks to be sorted based on the mean value for example.

In an example, the impact of an individual task on the project completion date is instead determined using an impact estimator neural network. This may be beneficial where, for example, a schedule does not correctly encode all the relevant dependencies between tasks. The input to the estimator neural network is the task vector, the output may be the impact value as described above for example (and which can be used as a training set for the impact estimator neural network). The estimator neural network may be a regression type algorithm, which outputs a value of the impact, or a classifier type algorithm which outputs a probability value corresponding to each of a range of impact values. This will be described in more detail in relation to the training stage below.

In an example, tasks where the duration has been grossly overestimated or underestimated are identified. This may be determined by comparing the original planned duration to the value of the predicted actual task duration determined from e.g. the value of the mode of the probability distribution for the relative task duration increase for example. The result of this comparison may be presented to an operator to determine those which are overestimated or underestimated by a sufficient amount and should be updated. Alternatively, this may be determined automatically by use of a threshold value for example. The schedule is then updated with the new predicted actual task durations for these tasks only.

In an example, any gaps in the tasks can be completed. The term "gaps" in the tasks refers here to missing task information in the schedule, for example missing names, missing WBS information, etc. Given a description of a potential task, i.e. given the task information that is available in the schedule file for the task, it is possible to infer its most likely vector representation (i.e. task vector), even in the presence of gaps, i.e. missing items of task information.

This may be achieved by substituting the missing task information features with null-values, inputting the task information (including the null values) into the first algorithm and obtaining an initial vector representation Tₓ. A neighbourhood, limited by a distance d, is defined around Tₓ, to obtain a collection of task vectors Tᵢ such that for each task i, | Tₓ - Tᵢ | < d. The collection of tasks in the neighbourhood is then used to infer the values for the missing null-values in the original task information vector, by use of the mean, mode or other statistical methods for example. The null value or values in the task information is replaced with a value generated from e.g. the mean or mode for that same property for the tasks in the neighbourhood. The task vector is then re-generated using the new task information as input.

Although the above described methods generate a task vector corresponding to each task, in an alternative example, each task vector corresponds to one or more tasks. In this example each task has a corresponding task vector, however two or more tasks may correspond to the same task vector. In this example, representations of sequences of tasks may additionally or alternatively be learned during the training stage, as will be described later.

The sequence may be in the same order or a different order to in the schedule. An ordering between the tasks in the sequence may be implied, for example based on the schedule but without taking dependency information explicitly (just assuming that task i-1 comes before task i, rather than looking at logical dependencies). The sequence may comprise tasks in a subnetwork or a portion of a subnetwork of a schedule. A subnetwork is a series of tasks that logically depend on each other, e.g. predecessors and successors. For example, in **Figure 2(a)(ii),** the tasks "Excavation", "Concrete pour", "Concrete curation" and "Bricklaying" form a sub-network. The tasks in a sequence may be selected based on the successor and predecessor relationships, for example, by first identifying a sub-network or a portion of a sub-network in the schedule, in which all the tasks logically depend. The sub-network may be the entire schedule for example if all the tasks in the schedule inter-depend.

One or more sequences may then be generated from the sub-network using a fixed maximum size window for example. For example, by starting at task i, where task i is the first task in the sub-network (or portion of sub-network), and taking the tasks [i, i+w], where w is the size of the window, to generate a first sequence. Then moving on to [i+1, i+w+1] to generate a second sequence, and so on until the window reaches the end of the sub-network (or portion of the sub-network). Thus each sub-network may generate a number of sequences, where each sequence comprises a fixed number of tasks.

For example, the sub-network may comprise 4 tasks, and the window size may be selected as 3. In this case, a first sequence comprising task 1, task 2 and task 3 is generated. A second sequence comprising task 2, task 3, and task 4 is generated. Two sequences are generated.

A sequence of tasks may be represented as a sequence of vector-encodings, and therefore as a bi-dimensional matrix. Thus in this example, a bi-dimensional matrix comprising the task information relating to a sequence of tasks from the schedule may be generated in step S202. Such a bi-dimensional matrix may then be represented as a one dimensional vector, before being inputted into the first algorithm, which generates a new single vector encoding for the characteristics of the sequence (a task vector). The first trained algorithm may take the task information corresponding to the two or more tasks in the sequence as input, in the form of a single vector of task information. Each sequence corresponds to a fixed number of tasks (3 tasks in the example given above). The numeric task information corresponding to each task in the sequence (corresponding to each row in the matrix) is concatenated to form a one-dimensional vector (i.e. by concatenating all the rows). Thus the task information in the bi-dimensional matrix may be flattened into a one dimensional vector for inputting into the first algorithm. Since each sequence comprises the same number of tasks, the vector will be the same length for each sequence.

In this case, two or more tasks may correspond to the task vector generated by the first trained algorithm. The task vector can then be used to generate new outcomes, for example relative duration increases for the sequence, using the second trained algorithm in the same manner as has been described previously. In this case, the outcome corresponds to the sequence of tasks, for example the duration is the duration of the sequence of tasks. Thus for each task vector, a probability distribution of predicted duration time information (for example predicted relative duration increase) for the one or more tasks corresponding to the task vector may be generated using the second trained algorithm, taking the task vector as input. A probability distribution for a predicted schedule duration time may then be generated using the probability distributions of the predicted duration time information, where each task vector has a corresponding predicted duration time, however two or more tasks may correspond to the predicted duration time (i.e. the duration may be that of two or more tasks). The second algorithm is trained to predict outcomes from sequences in this case.

A method of training the system to perform the above described methods will now be described. **Figure 6** shows a schematic illustration of a method of training a system for modelling a construction project in accordance with an example.

A training dataset, comprising a plurality of schedules and further comprising information relating to the actual durations of each task in the schedule is used to train the first algorithm and the second algorithm. The schedule data may again be in XER, XML or PP file format for example. During the training stage, information relating to the actual task duration, for example the actual start and end dates, for each task are also included in the schedule.

The first algorithm is trained initially, using the training data. The second algorithm is then trained, using the first trained algorithm for the task transformation.

Each schedule in the training data set is first run through the reader in S602. In step S602, the input reader module takes the input project schedule and generates the task information comprising the plurality of task features in the same manner as during operation. A filter stage may be included at this point in the method, to filter out clearly erroneous task data.

During the training stage, information relating to actual task durations, for example actual start and end dates, for each task are also extracted.

The next step S603 relates to the task transformation stage. The transformation process is first learned using an auto-encoder. At this stage, the first algorithm is trained. **Figures 7(a)** **and** **7(b)** show a schematic illustration of a simplified example of an auto-encoder. The example auto-encoder comprises 7 inputs, with 7 outputs and 5 layers. The bottleneck layer has 2 neurons.

Each task in each schedule in the training data set is first run through the complete auto-encoder, and the output used to update the trainable parameters in the auto-encoder. This update may done one task or schedule at a time, or in any kind of batch system for example. Once trained, the first half (encoder) is then preserved and used to create the transformation to the task vector when training the second algorithm (and during operation). The part within the dashed line in **Figure 7(a)** is an example of a part retained to transform tasks during the inference stage of the machine learning process and during operation. The auto-encoder is thus used to create the embedded space transformation of a task.

As described previously, an auto-encoder is a type of neural network with a hidden bottleneck layer, that learns to represent at its output the same data it receives as input (or a subset of it) whilst transmitting information through the bottleneck. This bottleneck layer is sized such that it is the smallest layer in the network, and has a lower number of neurons than the inputs. The size of the bottleneck layer can be selected based on the number of tasks available (i.e. the number of tasks in the schedule, M) and the number of features available for each task (i.e. the dimension of the vectors generated by the reader in S202, N). Once selected, this size is fixed during implementation.

In this case, the input for a task is the task information (in vector form) as has been described previously. As described during operation, the input task information corresponding to the current task is inputted into the auto-encoder neural network. As during operation, each node computes a weighted sum of all of its inputs and an additive bias term, and then applies the activation function to the result. The auto-encoder comprises both the encoder part (used during operation) and the decoder part (further layers). The bottleneck layer during training is thus one of the hidden layers. The output layer has more nodes than the bottleneck layer. In this case, it has the same number of nodes as the input layer. Each node in the final layer outputs a value into an auto-encoder output vector.

The auto-encoder output vectors may be used to determine a loss, using the input vectors (or part of the input vectors) as ground truths. For each task the gradient of the loss with respect to each of the trainable parameters of the auto-encoder neural network (i.e. the weights and biases) can be determined through back-propagation, and used to update the parameters. A negative log-likelihood loss function may be used for example. The tasks may be inputted in batches, for example a schedule at a time or any other batch size, and the update performed for each batch. Every operation performed in the forward pass of the auto-encoder is differentiable and therefore a functional expression for the derivative of the loss with respect to each parameter can be determined by the chain rule. The gradient values are calculated from these expressions using the back-propagated error and the activations (inputs for each layer from the forward pass, cached during the forward pass). This results in an array of gradient values, each corresponding to a parameter, for each task in the batch. These are converted to a single gradient value for each parameter (for example by taking the average of the gradient values for all tasks for the particular parameter in the batch).

The resulting gradient for each parameter is then used to calculate the updated parameter from the previous values using an optimizer function (e.g. a gradient descent type optimiser function). The input to the optimiser function for each parameter is the previous value, the corresponding gradient value and a learning rate parameter. In general, gradient descent based optimizers update the parameter in the direction of steepest descent of the loss function with respect to the parameter, scaled by a learning rate. The parameters are replaced with the new values and the process iterates with another batch of training examples.

As described above in relation to operation, during training the input task information may also comprise task information corresponding to one or more tasks in the surrounding context of the current task. In this case, the output layer will have less nodes than the input layer. Only the input task information corresponding to the current task is used as the ground truth.

Once the training of the auto-encoder is complete, the encoder part (ringed in dashed lines in the example of **Figure 7(a)****)** of the auto-encoder is retained for use in training the second algorithm and for operation.

The next stage is training of the second algorithm. This stage uses the trained encoder, i.e. the first trained algorithm. Each schedule may be processed in turn. Multiple schedules may be processed in batches. Step S603 is performed as during operation, using the trained encoder part of the auto-encoder to generate a task vector for each task in the schedule using the first algorithm. Thus in S603 there is output a task vector Tᵢ corresponding to each task i in the schedule.

For each task vector Tᵢ generated, an outcome yᵢ, which is to be the object of the prediction, may be associated. The outcome may be generated from the actual task duration and may be in the same form as the output of the second algorithm.

A two-dimensional vector Q may be formed comprising the task vectors and outcomes: $Q = \left(\begin{matrix}{T}_{0} , {y}_{0} \\ {T}_{1} , {y}_{1} \\ … \\ {T}_{i} , {y}_{i}\end{matrix}\right) = \left(\begin{matrix}{T}_{0,0} {T}_{0,1} {T}_{0,2} … {T}_{0 , N} \\ {y}_{0} \\ {T}_{1,0} {T}_{1,1} {T}_{1,2} … {T}_{1 , N} \\ {y}_{1} \\ … \\ {T}_{i , 0} {T}_{i , 1} {T}_{i , 2} … {T}_{i , N} {y}_{i}\end{matrix}\right)$

The outcome y is generated from the task information provided in the schedule. For example, the actual start and end dates for each task may be read from the schedule, and a task duration value determined for the task. This is then put in the same form as the output of the second algorithm. In the example described therefore, this is converted to a relative task duration increase value, and mapped to one of the bucket ranges.

Although a matrix Q of the values for a schedule is shown, each task may be processed separately. An outcome y corresponding to each task is generated and used for training.

Thus in the example described, for each task i, a task vector Tᵢ of length L is generated by the first trained algorithm. This is input into the second algorithm which generates an output vector corresponding to a probability distribution as has been described previously. A vector y (having the same length as the output vector of the second algorithm) is also generated from the schedule data and used as a ground truth to train the second algorithm. The vector y comprises a value 1 corresponding to the relative duration increase range into which the actual duration value falls, and a value 0 corresponding to the other ranges. Note that where a regression type model is used instead, the actual value of the task duration (or relative task duration increase) may be used as a ground truth y, and the vector y of probability values need not be generated.

**Figure 7(c)** shows an example of how the relative increase in task duration in the training data can be separated into arbitrary range buckets. Each diamond represents a task. A dataset creation mechanism thus takes a list of the translated tasks and associates them with outcomes to be predicted. The data in Q is used to train a machine learning predictor h, i.e. the second algorithm, which learns to estimate the probability of outcome y from the input Tᵢ.

Thus in S606, the task vector Tᵢ for each task i in the schedule is inputted into the second algorithm, the "Inference Engine". For each task vector, step S606 comprises generating a probability distribution of a task duration time using the second algorithm, in the same manner as during operation, for example, generating a probability that there is a relative increase in the task duration corresponding to each of a plurality of ranges.

**Figure 8(a)** shows a schematic illustration of an example of a prediction model, i.e. an example of the second algorithm, being trained on an observed outcome of a task. **Figure 8(b)** shows an example probability distribution used as the outcome, i.e. ground truth, to train the model. It shows an example of the distribution over Rₖ used to train the model (i.e. the values of the vector y). The distribution comprises a probability value corresponding to each relative task duration increase range. Again, the six ranges are: 0 - 0.5, 0.5 - 0.9, 0.9 - 1.1, 1.1 - 1.5, 1.5 - 2.0, and >2.0. The probability distribution comprises a value of 1 corresponding to the fourth range (in which the actual duration falls) and a zero corresponding to the other ranges.

S604 outputs a probability distribution corresponding to each task, which may be a vector of probability values, where each entry in the vector corresponds to a range, as described in relation to the operation stage. The outcome y (extracted from the training schedule data) also comprises a vector, which has a value of 1 corresponding to the range in which the actual task duration falls, and a value of 0 for the other ranges. The training of the algorithm is thus done by giving a "1 versus all" representation of posterior probability, where the value of P(Rₖ|Tᵢ) for every range R_{K} is 0, except for the range where the true observation (the ground truth) actually happened. This representation is generated automatically during the pre-processing phase of the training data, i.e. by the reader. These are then used as ground truths to train the algorithm.

The output vectors (i.e. comprising the probability values generated by the second algorithm) may be used to determine a loss, where the outcome vectors (the "1 versus all" representation extracted directly from the actual data relating to the completed project) are used as ground truths. The tasks may be inputted in batches and the update performed per batch. For each task inputted in a batch, the gradient of the loss with respect to each of the trainable parameters in the second algorithm (e.g. the weights and biases) can be determined through back-propagation, and used to update the parameters. A cross entropy loss function may be used for example. This results in an array of gradient values, each corresponding to a parameter, for each task in the batch. These are converted to a single gradient value for each parameter (for example by taking the average of the gradient values for all tasks for the particular parameter). The resulting gradient for each parameter is then used to calculate the updated parameter from the previous values using an optimizer function (e.g. a gradient descent type optimiser function). The parameters are replaced with the new values and the process iterates with another batch of training signals.

The subsequent steps S605, S606 and S608 (corresponding to steps S205, S206 and S208 described above) are optional. These may be performed to generate data to train an impact estimator neural network for example.

In a further example, the impact of an individual task on the project completion date is determined using an impact estimator neural network, as has been described previously. This neural network is also trained during the training stage. The following is a description of a method of training an impact estimator neural network in accordance with an example. In this method, the simulation steps S605, S606 and S608 described above in relation to the operation stage may be performed for each schedule during training, and an aggregate of multiple simulations may be used. A training set of the final impact of each task is obtained, enabling the training of an "impact estimator network".

As described above, the input to the impact estimator neural network may be the task vector, and the output may be a value for the impact (for example in % ranges using a classifier, or as a value using a regression type model). The ground truth may be generated by running the simulations in S605, S606 and S608 on the training data to produce the impact values.

Although in the above described methods of training, each task vector corresponds to a single task, as has been described above one or more of the task vectors may correspond to one or more tasks. A bi-dimensional matrix comprising the task information relating to a sequence of tasks is converted to a 1 dimensional vector as described previously, which is inputted into an auto-encoder, comprising a bottleneck layer, as described above. The parameters of the auto-encoder are updated in the same manner described previously, and the first half (the encoder part) retained for use during the subsequent training stages and operation. The second trained algorithm is then trained in the same manner as described previously, taking the task vector as input and outputting, for example, relative duration increases for the sequence.

In an example, the model, comprising the first algorithm and the second algorithm is trained, and then simply deployed during operation.

In an example, the above described methods enable precise allocation of risk contingency budgets, for example for each area of the work breakdown structure. Information regarding the uncertainty of outcomes such as time scales may be provided in a timely manner.

In an example, the method allows interactive planning of a project schedule, where the planner is able to directly observe which tasks in the schedule are prone to risk of negative outcomes, enabling them to enact pre-emptive mitigation measures, or change the schedule altogether to reduce the risk. Upcoming and residual risk of a project in execution may be highlighted, so that attention and resources may be directed to those tasks that are shown as more risky. Furthermore, requirements may be forecasted more accurately.

In an example, while construction is ongoing, it is possible to continuously update the projections for the end date of the project, and highlight possible new adverse events that have not yet materialised.

In an example, the Quantitative Schedule Risk Analysis process is augmented by the use of predictions of future task outcomes. Aggregating the overall risk profiles of tasks, projects and portfolios of projects can provide information as to which parts of a portfolio are more in danger of not being executed correctly. The competitiveness of a schedule may be better analysed, and validating (or discrediting) projections about delivery of a project may be performed based on the predicted durations. The risk profile of a project and the likelihood of the project being delivered on time may be determined.

While certain examples have been described, these examples have been presented by way of example only, and are not intended to limit the scope of the inventions, which is defined by the appended claims. Indeed the novel methods and apparatus described herein may be embodied in a variety of other forms; furthermore, various omissions, substitutions and changes in the form of methods and apparatus described herein may be made.

## Claims

1. A method of constructing a construction, the constructing including a plurality of tasks, the method including the computer implemented steps (a) to (f) of:
(a) using a training dataset (S601) comprising the plurality of tasks and data relating to the actual duration times for one or more tasks;
(b) receiving task data corresponding to each task in the training dataset (S602), the task data including: data identifying task type; data relating to the planned task duration, and data relating to any relationships to one or more other tasks;
(c) training a first algorithm to generate task vectors, using the task data (S603);
(d) generating a first plurality of task vectors (S604), each task vector corresponding to one or more tasks, using the first trained algorithm which processes the task data corresponding to the one or more tasks, such that each task has a corresponding task vector;
(e) for each task vector, using a second algorithm which receives the task vector as input and generates data relating to a predicted duration time for the one or more tasks (S605); and
(f) training the second algorithm using the actual duration times (S606);
the method including the computer-implemented steps (i) to (iv) of:
(i) for the plurality of tasks (S201), receiving task data (S202) corresponding to each task, the received task data including: data identifying task type; data relating to a planned task duration, and data relating to any relationships to one or more other tasks of the plurality of tasks (S203);
(ii) generating a second plurality of task vectors (S204, S205), each task vector corresponding to one or more corresponding tasks of the plurality of tasks, using the first trained algorithm which processes the received task data corresponding to the one or more corresponding tasks, such that each task has a corresponding task vector;
(iii) for each task vector, using the second trained algorithm which receives the task vector as input and generates data relating to a predicted duration time for the one or more corresponding tasks (S206);
(iv) generating a schedule (S207) including data relating to a predicted schedule duration time, using the data relating to the predicted duration times, the schedule including the tasks, which are ordered in the schedule, wherein the data relating to the predicted schedule duration time includes a probability distribution, and wherein generating the data relating to the predicted schedule duration time comprises:
sampling a respective probability distribution relating to each task vector a plurality of times, to generate a plurality of duration values corresponding to each task vector;
applying the duration values to the schedule to generate a plurality of duration values corresponding to the schedule;
the method further including the step of:
(v) constructing the construction using the schedule generated in step (iv), the schedule including the tasks which are ordered in the schedule, and the respective predicted duration times of the ordered tasks.

2. The method of Claim 1, wherein the construction is a building, a bridge, a tunnel, a sewer, a railway, an airport, a port, a dam or a road.

3. The method of any previous Claim,
(a) the method including the computer-implemented step of: storing the schedule including the data relating to the predicted schedule duration time, and including the tasks which are ordered in the schedule, and the respective predicted duration times of the ordered tasks; or
(b) wherein the respective predicted duration times of the ordered tasks comprise adjusted values of the planned task durations; or
(c) wherein the data relating to any relationships to one or more other tasks includes the number of other tasks having a relationship to the task; or
(d) wherein the generated data relating to a predicted duration time includes a probability distribution; or
(e) wherein an impact of the one or more corresponding tasks corresponding to a task vector is determined by:
sampling the probability distribution relating to the task vector a plurality of times, to generate a plurality of duration values corresponding to the task vector;
applying the duration values to the schedule to generate a plurality of duration values corresponding to the schedule; or
(f) wherein the impact of the one or more corresponding tasks corresponding to each task vector is determined; or
(g) wherein, for each task vector, data is generated relating to an impact on the schedule duration time using a third trained algorithm, using the task vector as input.

4. The method of any of Claims 1 to 3, (a) wherein if a task where data identifying the type of task, data relating to the planned task duration, and/or data relating to any relationships to one or more other tasks includes a null value:
a task vector is generated using the first trained algorithm;
a plurality of other task vectors in the schedule which are similar to the task vector are identified;
task data for the other task vectors corresponding to the data comprising a null value for the task vector is identified;
task data for the task vector is generated using the task data for the other task vectors;
an updated task vector is generated for the task using a first trained algorithm taking the task data as input; or
(b) wherein the first trained algorithm also uses the task data corresponding to one or more other tasks related to the one or more corresponding tasks as input; or
(c) wherein the task data corresponding to one or more other tasks is combined into a fixed length vector, which is combined with the task data for the current task; or
(d) wherein the task vectors correspond to two or more tasks; or
(e) wherein the number of tasks corresponding to a task vector is defined by a fixed window size, and wherein the task data corresponding to the two or more tasks is combined into a one-dimensional vector for input to the first trained algorithm; or
(f) wherein the second trained algorithm comprises a plurality of neural networks, and wherein the data relating to a predicted duration time is generated by combining the output of the plurality of neural networks; or
(g) wherein the second algorithm is trained by giving a 1 versus all representation of posterior probability, where the value of P(Rₖ|Tᵢ) for every range R_{K} is 0, except for the range where the true observation, the ground truth, actually happened.

5. The method of any previous Claim, wherein the first trained algorithm is an encoder part of a neural network based auto-encoder.

6. The method of any previous Claim, the method further including the computer implemented steps of:
sampling the probability distribution relating to the task vector a plurality of times, to generate a plurality of duration values corresponding to the task vector;
applying the duration values to the schedule to generate a plurality of duration values corresponding to the schedule;
determining an impact of the one or more tasks corresponding to the task vector;
training a third algorithm to generate impact data, using the determined impact.

7. The method of any previous Claim, wherein the schedule provides for a reduced risk of construction accidents.

8. The method of any previous Claim, wherein the schedule provides for an improved quality of the construction.

9. The method of any previous Claim, wherein the schedule provides for minimization of the time to construct the construction.

10. The method of any previous Claim, (a) including the computer-implemented steps of an input reader parsing project schedules in various file formats and processing the resulting data, and writing the processed data to a common database using a standard format; or
(b) including the computer-implemented step of an input filter being used to detect and to remove erroneous schedule data to prevent the erroneous schedule data being used further.

11. The method of any previous Claim, (a) wherein the predicted duration times include predicted probability distributions, the method including using the predicted probability distributions to simulate the outcomes of sequences of tasks in order to simulate progression of the schedule over time and to construct probability distributions for schedule milestones and project completion as well as to evaluate risk factors that may adversely impact upon schedule progression; or
(b) wherein, in step (ii), the transformation process is learned from data of historical schedules, by presenting data from multiple tasks (optionally, presenting data from multiple tasks at the same time), such that the model learns about the typical surrounding context of each task, and how to represent it with respect to its peers.

12. The method of any previous Claim, wherein after the distributions of duration outcomes have been estimated, these are included in a simulation based on random sampling, to estimate the distribution of the final outcome, by applying the new sampled durations to the entire schedule, with constraints, by repeatedly sampling new durations for each task in the schedule and recalculating the projected end date of the schedule, to collect a distribution of possible outcomes.

13. The method of any previous Claim, (a) wherein for a partially completed construction, training the first and second algorithms includes using schedules with data relating to the partially completed construction of the construction; or
(b) wherein, for a partially completed construction, a new schedule is generated, including using data relating to the progress of the partially completed construction.

14. The method of any previous Claim, (a) wherein a predicted duration time for the one or more tasks is presented on a display using a histogram, where each bucket of the histogram represents a time-dimension prediction of the task, and the height of the histogram represents the probability of this outcome; or (b) wherein the generated schedule including the data relating to a predicted schedule duration time, and including the tasks, which are ordered in the schedule, is presented on a display using a Gantt chart, wherein an impact each individual task has upon the schedule is highlighted, e.g. using colour and/or distinctive shapes; or
(c) wherein for a partially completed construction, the actual progress of the construction is plotted as a function of time, and the originally planned progress of the construction is plotted as a function of time, and is presented on a display; or
(d) wherein for a partially completed construction, a specific probability likelihood is received from a user, and the progress of the construction is plotted as a function of time for the specific probability likelihood received from the user, and is presented on a display; or
(e) wherein an array of tiles is presented on a display with respect to two axes, the first axis representing respective portions of the construction of the construction, and the second axis representing respective ranges of completion outcomes of the respective portions of the construction of the construction, wherein each tile includes a presentation of how likely the respective range of completion outcomes is to occur; or
(f) wherein an array of tiles is presented on a display with respect to two axes, the first axis representing respective portions of the construction of the construction, and the second axis representing respective ranges of completion outcomes of the respective portions of the construction of the construction, wherein each tile includes a presentation of how likely the respective range of completion outcomes is to occur, and wherein the array of tiles provides a heatmap-style graphical representation; or
(g) wherein the method includes the computer implemented step of validating or rejecting the schedule by comparing a risk profile to a predefined set of parameters.

15. A computer system configured to provide a schedule for constructing a construction, the constructing including a plurality of tasks, the computer system configured to:
(a) use a training dataset (S601) comprising the plurality of tasks and data relating to the actual duration times for one or more tasks;
(b) receive task data corresponding to each task in the training dataset (S602), the task data including: data identifying task type; data relating to the planned task duration, and data relating to any relationships to one or more other tasks;
(c) train a first algorithm to generate task vectors, using the task data (S603);
(d) generate a first plurality of task vectors (S604), each task vector corresponding to one or more tasks, using the first trained algorithm which processes the task data corresponding to the one or more tasks, such that each task has a corresponding task vector;
(e) for each task vector, use a second algorithm which receives the task vector as input and generates data relating to a predicted duration time for the one or more tasks (S605); and
(f) train the second algorithm using the actual duration times (S606);
the computer system configured to:
(i) for the plurality of tasks (S201), receive task data (S202) corresponding to each task, the received task data including: data identifying task type; data relating to a planned task duration, and data relating to any relationships to one or more other tasks of the plurality of tasks (S203);
(ii) generate a second plurality of task vectors (S204, S205), each task vector corresponding to one or more corresponding tasks of the plurality of tasks, using the first trained algorithm which processes the received task data corresponding to the one or more corresponding tasks, such that each task has a corresponding task vector;
(iii) for each task vector, use the second trained algorithm which receives the task vector as input and generates data relating to a predicted duration time for the one or more corresponding tasks (S206);
(iv) generate a schedule (S207) including data relating to a predicted schedule duration time, using the data relating to the predicted duration times, the schedule including the tasks, which are ordered in the schedule, wherein the data relating to the predicted schedule duration time includes a probability distribution, and wherein generating the data relating to the predicted schedule duration time comprises:
sampling a respective probability distribution relating to each task vector a plurality of times, to generate a plurality of duration values corresponding to each task vector;
applying the duration values to the schedule to generate a plurality of duration values corresponding to the schedule;
(v) provide the schedule generated in (iv), the schedule including the tasks which are ordered in the schedule, and the respective predicted duration times of the ordered tasks.

## Patentansprüche

1. Verfahren zum Konstruieren einer Konstruktion, wobei das Konstruieren eine Vielzahl von Aufgaben beinhaltet, wobei das Verfahren die folgenden computerimplementierten Schritte (a) bis (f) beinhaltet:
(a) Verwenden eines Trainingsdatensatzes (S601), der die Vielzahl von Aufgaben und Daten, die sich auf die tatsächlichen Zeitdauern für eine oder mehrere Aufgaben beziehen, umfasst;
(b) Empfangen von Aufgabendaten, die jeder Aufgabe in dem Trainingsdatensatz entsprechen (S602), wobei die Aufgabendaten Folgendes beinhalten: Daten, die einen Aufgabentyp identifizieren; Daten, die sich auf die geplante Aufgabendauer beziehen, und Daten, die sich auf beliebige Beziehungen zu einer oder mehreren anderen Aufgaben beziehen;
(c) Trainieren eines ersten Algorithmus, um Aufgabenvektoren unter Verwendung der Aufgabendaten zu generieren (S603);
(d) Generieren einer ersten Vielzahl von Aufgabenvektoren (S604), wobei jeder Aufgabenvektor einer oder mehreren Aufgaben entspricht, unter Verwendung des ersten trainierten Algorithmus, der die Aufgabendaten, die der einen oder den mehreren Aufgaben entsprechen, derart verarbeitet, dass jede Aufgabe einen entsprechenden Aufgabenvektor aufweist;
(e) für jeden Aufgabenvektor, Verwenden eines zweiten Algorithmus, der den Aufgabenvektor als Eingabe empfängt und Daten generiert, die sich auf eine vorhergesagte Zeitdauer für die eine oder die mehreren Aufgaben beziehen (S605); und
(f) Trainieren des zweiten Algorithmus unter Verwendung der tatsächlichen Zeitdauern (S606);
wobei das Verfahren die folgenden computerimplementierten Schritte (i) bis (iv) beinhaltet:
(i) für die Vielzahl von Aufgaben (S201), Empfangen von Aufgabendaten (S202), die jeder Aufgabe entsprechen, wobei die empfangenen Aufgabendaten Folgendes beinhalten: Daten, die einen Aufgabentyp identifizieren; Daten, die sich auf eine geplante Aufgabendauer beziehen, und Daten, die sich auf beliebige Beziehungen zu einer oder mehreren anderen Aufgaben der Vielzahl von Aufgaben beziehen (S203);
(ii) Generieren einer zweiten Vielzahl von Aufgabenvektoren (S204, S205), wobei jeder Aufgabenvektor einer oder mehreren entsprechenden Aufgaben der Vielzahl von Aufgaben entspricht, unter Verwendung des ersten trainierten Algorithmus, der die empfangenen Aufgabendaten, die der einen oder den mehreren entsprechenden Aufgaben entsprechen, derart verarbeitet, dass jede Aufgabe einen entsprechenden Aufgabenvektor aufweist;
(iii) für jeden Aufgabenvektor, Verwenden des zweiten trainierten Algorithmus, der den Aufgabenvektor als Eingabe empfängt und Daten generiert, die sich auf eine vorhergesagte Zeitdauer für die eine oder die mehreren entsprechenden Aufgaben beziehen (S206);
(iv) Generieren eines Zeitplans (S207), der Daten beinhaltet, die sich auf eine vorhergesagte Zeitplanzeitdauer beziehen, unter Verwendung der Daten, die sich auf die vorhergesagten Zeitdauern beziehen, wobei der Zeitplan die Aufgaben beinhaltet, die in dem Zeitplan geordnet sind, wobei die Daten, die sich auf die vorhergesagte Zeitplanzeitdauer beziehen, eine Wahrscheinlichkeitsverteilung beinhalten und wobei das Generieren der Daten, die sich auf die vorhergesagte Zeitplanzeitdauer beziehen, Folgendes umfasst:
Abtasten einer jeweiligen Wahrscheinlichkeitsverteilung, die sich auf jeden Aufgabenvektor bezieht, eine Vielzahl von Malen, um eine Vielzahl von Dauerwerten zu generieren, die jedem Aufgabenvektor entspricht;
Anwenden der Dauerwerte auf den Zeitplan, um eine Vielzahl von Dauerwerten zu generieren, die dem Zeitplan entspricht;
wobei das Verfahren ferner den folgenden Schritt beinhaltet:
(v) Konstruieren der Konstruktion unter Verwendung des in Schritt (iv) generierten Zeitplans, wobei der Zeitplan die Aufgaben, die in dem Zeitplan geordnet sind, und die jeweiligen vorhergesagten Zeitdauern der geordneten Aufgaben beinhaltet.

2. Verfahren nach Anspruch 1, wobei die Konstruktion ein Gebäude, eine Brücke, ein Tunnel, ein Abwasserkanal, eine Eisenbahnstrecke, ein Flughafen, ein Hafen, ein Damm oder eine Straße ist.

3. Verfahren nach einem der vorhergehenden Ansprüche, (a) wobei das Verfahren den folgenden computerimplementierten Schritt beinhaltet: Speichern des Zeitplans, der die Daten, die sich auf die vorhergesagte Zeitplanzeitdauer beziehen, beinhaltet und die Aufgaben, die in dem Zeitplan geordnet sind, beinhaltet und die jeweiligen vorhergesagten Zeitdauern der geordneten Aufgaben; oder
(b) wobei die jeweiligen vorhergesagten Zeitdauern der geordneten Aufgaben angepasste Werte der geplanten Aufgabendauern umfassen; oder
(c) wobei die Daten, die sich auf beliebige Beziehungen zu einer oder mehreren anderen Aufgaben beziehen, die Anzahl anderer Aufgaben, welche eine Beziehung zu der Aufgabe aufweisen, beinhalten; oder
(d) wobei die generierten Daten, die sich auf eine vorhergesagte Zeitdauer beziehen, eine Wahrscheinlichkeitsverteilung beinhalten; oder
(e) wobei ein Einfluss der einen oder der mehreren entsprechenden Aufgaben, die einem Aufgabenvektor entsprechen, durch Folgendes bestimmt wird:
Abtasten der Wahrscheinlichkeitsverteilung, die sich auf den Aufgabenvektor bezieht, eine Vielzahl von Malen, um eine Vielzahl von Dauerwerten zu generieren, die dem Aufgabenvektor entspricht;
Anwenden der Dauerwerte auf den Zeitplan, um eine Vielzahl von Dauerwerten zu generieren, die dem Zeitplan entspricht; oder
(f) wobei der Einfluss der einen oder der mehreren entsprechenden Aufgaben, die jedem Aufgabenvektor entsprechen, bestimmt wird; oder
(g) wobei für jeden Aufgabenvektor Daten, die sich auf einen Einfluss auf die Zeitplanzeitdauer beziehen, unter Verwendung eines dritten trainierten Algorithmus unter Verwendung des Aufgabenvektors als Eingabe generiert werden.

4. Verfahren nach einem der Ansprüche 1 bis 3, (a) wobei, wenn eine Aufgabe, bei der Daten, die den Typ der Aufgabe identifizieren, Daten, die sich auf die geplante Aufgabendauer beziehen, und/oder Daten, die sich auf eine beliebige Beziehung zu einer oder mehreren anderen Aufgaben beziehen, einen Nullwert beinhalten:
ein Aufgabenvektor unter Verwendung des ersten trainierten Algorithmus generiert wird;
eine Vielzahl von anderen Aufgabenvektoren in dem Zeitplan, die dem Aufgabenvektor ähnlich sind, identifiziert werden;
Aufgabendaten für die anderen Aufgabenvektoren, die den Daten entsprechen, welche einen Nullwert für den Aufgabenvektor umfassen, identifiziert werden;
Aufgabendaten für den Aufgabenvektor unter Verwendung der Aufgabendaten für die anderen Aufgabenvektoren generiert werden;
ein aktualisierter Aufgabenvektor für die Aufgabe unter Verwendung eines ersten trainierten Algorithmus, der die Aufgabendaten als Eingabe nimmt, generiert wird; oder
(b) wobei der erste trainierte Algorithmus zudem die Aufgabendaten, die einem oder mehreren anderen Aufgaben entsprechen, welche sich auf die eine oder die mehreren entsprechenden Aufgaben beziehen, als Eingabe verwendet; oder
(c) wobei die Aufgabendaten, die der einen oder den mehreren anderen Aufgaben entsprechen, zu einem Vektor mit fester Länge kombiniert werden, der mit den Aufgabendaten für die aktuelle Aufgabe kombiniert wird; oder
(d) wobei die Aufgabenvektoren zwei oder mehr Aufgaben entsprechen; oder
(e) wobei die Anzahl von Aufgaben, die einem Aufgabenvektor entspricht, durch eine feste Fenstergröße definiert ist und wobei die Aufgabendaten, die den zwei oder mehr Aufgaben entsprechen, zu einem eindimensionalen Vektor zur Eingabe in den ersten trainierten Algorithmus kombiniert werden; oder
(f) wobei der zweite trainierte Algorithmus eine Vielzahl von neuronalen Netzwerken umfasst und wobei die Daten, die sich auf eine vorhergesagte Zeitdauer beziehen, durch Kombinieren der Ausgabe der Vielzahl von neuronalen Netzwerken generiert werden; oder
(g) wobei der zweite Algorithmus trainiert wird, indem eine 1 gegenüber jeglicher Darstellung von A-posteriori-Wahrscheinlichkeit gegeben wird, bei der der Wert von P(Rₖ|Tᵢ) für jeden Bereich R_{K} 0 ist, mit Ausnahme des Bereiches, bei dem die wahre Beobachtung, die Ground-Truth, tatsächlich stattfand.

5. Verfahren nach einem der vorhergehenden Ansprüche, wobei der erste trainierte Algorithmus ein Codiererteil eines netzwerkbasierten Autocodierers ist.

6. Verfahren nach einem der vorhergehenden Ansprüche, wobei das Verfahren ferner die folgenden computerimplementierten Schritte beinhaltet:
Abtasten der Wahrscheinlichkeitsverteilung, die sich auf den Aufgabenvektor bezieht, eine Vielzahl von Malen, um eine Vielzahl von Dauerwerten zu generieren, die dem Aufgabenvektor entspricht;
Anwenden der Dauerwerte auf den Zeitplan, um eine Vielzahl von Dauerwerten zu generieren, die dem Zeitplan entspricht;
Bestimmen eines Einflusses der einen oder der mehreren Aufgaben, die dem Aufgabenvektor entsprechen;
Trainieren eines dritten Algorithmus, um Einflussdaten unter Verwendung des bestimmten Einflusses zu generieren.

7. Verfahren nach einem der vorhergehenden Ansprüche, wobei der Zeitplan ein reduziertes Risiko von Konstruktionsunfällen bereitstellt.

8. Verfahren nach einem der vorhergehenden Ansprüche, wobei der Zeitplan eine verbesserte Qualität der Konstruktion bereitstellt.

9. Verfahren nach einem der vorhergehenden Ansprüche, wobei der Zeitplan eine Minimierung der Zeit zum Konstruieren der Konstruktion bereitstellt.

10. Verfahren nach einem der vorhergehenden Ansprüche, (a) beinhaltend die computerimplementierten Schritte eines Eingabelesegeräts, das die Prognosezeitpläne in verschiedenen Dateiformaten parst und die resultierenden Daten verarbeitet und die verarbeiteten Daten in eine gemeinsame Datenbank unter Verwendung eines Standardformats schreibt; oder
(b) beinhaltend den computerimplementierten Schritt eines Eingabefilters, das dazu verwendet wird, fehlerhafte Zeitplandaten zu detektieren und zu entfernen, um zu verhindern, dass die fehlerhaften Zeitplandaten weiterverwendet werden.

11. Verfahren nach einem der vorhergehenden Ansprüche, (a) wobei die vorhergesagten Zeitdauern vorhergesagte Wahrscheinlichkeitsverteilungen beinhalten, wobei das Verfahren Verwenden der vorhergesagten Wahrscheinlichkeitsverteilungen zum Simulieren der Ergebnisse von Sequenzen von Aufgaben, um einen Fortschritt des Zeitplans im Laufe der Zeit zu simulieren und Wahrscheinlichkeitsverteilungen für Zeitplanmeilensteine zu konstruieren und einen Abschluss zu prognostizieren, sowie zum Auswerten von Risikofaktoren, die den Zeitplanfortschritt negativ beeinflussen können, beinhaltet; oder
(b) wobei der Transformationsprozess in Schritt (ii) anhand von Daten von historischen Zeitplänen erlernt wird, indem Daten von mehreren Aufgaben präsentiert werden (optional Daten von mehreren Aufgaben gleichzeitig präsentiert werden), sodass das Modell den typischen umgebenden Kontext jeder Aufgabe und dessen Darstellung in Bezug auf dessen Peers erlernt.

12. Verfahren nach einem der vorhergehenden Ansprüche, wobei nach der Schätzung der Verteilungen von Dauerergebnissen diese in eine Simulation basierend auf einer zufälligen Abtastung einbezogen werden, um die Verteilung des endgültigen Ergebnisses zu schätzen, indem die neuen abgetasteten Dauern auf den gesamten Zeitplan angewendet werden, mit Einschränkungen, indem neue Dauern für jede Aufgabe in dem Zeitplan wiederholt abgetastet werden und das prognostizierte Enddatum des Zeitplans neu berechnet wird, um eine Verteilung von möglichen Ergebnissen zu erfassen.

13. Verfahren nach einem der vorhergehenden Ansprüche, (a) wobei für eine teilweise abgeschlossene Konstruktion das Trainieren des ersten und des zweiten Algorithmus Verwenden von Zeitplänen mit Daten, die sich auf die teilweise abgeschlossene Konstruktion der Konstruktion beziehen, beinhaltet; oder
(b) wobei für eine teilweise abgeschlossene Konstruktion ein neuer Zeitplan generiert wird, beinhaltend Verwenden von Daten, die sich auf den Fortschritt der teilweise abgeschlossenen Konstruktion beziehen.

14. Verfahren nach einem der vorhergehenden Ansprüche, (a) wobei eine vorhergesagte Zeitdauer für die eine oder die mehreren Aufgaben auf einer Anzeige unter Verwendung eines Histogramms präsentiert wird, bei dem jeder Bucket des Histogramms eine Zeitbereichsvorhersage der Aufgabe darstellt und die Höhe des Histogramms die Wahrscheinlichkeit dieses Ergebnisses darstellt; oder (b) wobei der generierte Zeitplan, der die Daten, die sich auf eine vorhergesagte Zeitplanzeitdauer beziehen, beinhaltet und die Aufgaben, die in dem Zeitplan geordnet sind, beinhaltet, auf einer Anzeige unter Verwendung einer Gantt-Karte präsentiert wird, wobei ein Einfluss, den jede individuelle Aufgabe auf den Zeitplan hat, z. B. unter Verwendung einer Farbe und/oder markanten Formen hervorgehoben wird; oder
(c) wobei für eine teilweise abgeschlossene Konstruktion der tatsächliche Fortschritt der Konstruktion in Abhängigkeit der Zeit abgebildet wird und der ursprünglich geplante Fortschritt der Konstruktion in Abhängigkeit der Zeit abgebildet wird und auf einer Anzeige dargestellt wird; oder
(d) wobei für eine teilweise abgeschlossene Konstruktion eine spezifische Wahrscheinlichkeit von einem Benutzer empfangen wird und der Fortschritt der Konstruktion in Abhängigkeit der Zeit für die von dem Benutzer empfangene spezifische Wahrscheinlichkeit abgebildet wird und auf einer Anzeige präsentiert wird; oder
(e) wobei eine Anordnung von Kacheln auf einer Anzeige in Bezug auf zwei Achsen präsentiert wird, wobei die erste Achse jeweilige Abschnitte der Konstruktion der Konstruktion darstellt und die zweite Achse jeweilige Bereiche von Abschlussergebnissen der jeweiligen Abschnitte der Konstruktion der Konstruktion darstellt, wobei jede Kachel eine Präsentation davon beinhaltet, wie wahrscheinlich es ist, dass der jeweilige Bereich von Abschlussergebnissen auftritt; oder
(f) wobei eine Anordnung von Kacheln auf einer Anzeige in Bezug auf zwei Achsen präsentiert wird, wobei die erste Achse jeweilige Abschnitte der Konstruktion der Konstruktion darstellt und die zweite Achse jeweilige Bereiche von Abschlussergebnissen der jeweiligen Abschnitte der Konstruktion der Konstruktion darstellt, wobei jede Kachel eine Präsentation davon beinhaltet, wie wahrscheinlich es ist, dass der jeweilige Bereich von Abschlussergebnissen auftritt; und wobei die Anordnung von Kacheln eine grafische Darstellung vom Heatmap-Typ bereitstellt; oder
(g) wobei das Verfahren den computerimplementierten Schritt des Bestätigens oder Ablehnens des Zeitplans durch Vergleichen eines Risikoprofils mit einem vordefinierten Satz von Parametern beinhaltet.

15. Computersystem, das dazu konfiguriert ist, einen Zeitplan zum Konstruieren einer Konstruktion bereitzustellen, wobei das Konstruieren eine Vielzahl von Aufgaben beinhaltet, wobei das Computersystem zu Folgendem konfiguriert ist:
(a) Verwenden eines Trainingsdatensatzes (S601), der die Vielzahl von Aufgaben und Daten, die sich auf die tatsächlichen Zeitdauern für eine oder mehrere Aufgaben beziehen, umfasst;
(b) Empfangen von Aufgabendaten, die jeder Aufgabe in dem Trainingsdatensatz entsprechen (S602), wobei die Aufgabendaten Folgendes beinhalten: Daten, die einen Aufgabentyp identifizieren; Daten, die sich auf die geplante Aufgabendauer beziehen, und Daten, die sich auf beliebige Beziehungen zu einer oder mehreren anderen Aufgaben beziehen;
(c) Trainieren eines ersten Algorithmus, um Aufgabenvektoren unter Verwendung der Aufgabendaten zu generieren (S603);
(d) Generieren einer ersten Vielzahl von Aufgabenvektoren (S604), wobei jeder Aufgabenvektor einer oder mehreren Aufgaben entspricht, unter Verwendung des ersten trainierten Algorithmus, der die Aufgabendaten, die der einen oder den mehreren Aufgaben entsprechen, derart verarbeitet, dass jede Aufgabe einen entsprechenden Aufgabenvektor aufweist;
(e) für jeden Aufgabenvektor, Verwenden eines zweiten Algorithmus, der den Aufgabenvektor als Eingabe empfängt und Daten generiert, die sich auf eine vorhergesagte Zeitdauer für die eine oder die mehreren Aufgaben beziehen (S605); und
(f) Trainieren des zweiten Algorithmus unter Verwendung der tatsächlichen Zeitdauern (S606);
wobei das Computersystem zu Folgendem konfiguriert ist:
(i) für die Vielzahl von Aufgaben (S201), Empfangen von Aufgabendaten (S202), die jeder Aufgabe entsprechen, wobei die empfangenen Aufgabendaten Folgendes beinhalten: Daten, die einen Aufgabentyp identifizieren; Daten, die sich auf eine geplante Aufgabendauer beziehen, und Daten, die sich auf beliebige Beziehungen zu einer oder mehreren anderen Aufgaben der Vielzahl von Aufgaben beziehen (S203);
(ii) Generieren einer zweiten Vielzahl von Aufgabenvektoren (S204, S205), wobei jeder Aufgabenvektor einer oder mehreren entsprechenden Aufgaben der Vielzahl von Aufgaben entspricht, unter Verwendung des ersten trainierten Algorithmus, der die empfangenen Aufgabendaten, die der einen oder den mehreren entsprechenden Aufgaben entsprechen, derart verarbeitet, dass jede Aufgabe einen entsprechenden Aufgabenvektor aufweist;
(iii) für jeden Aufgabenvektor, Verwenden des zweiten trainierten Algorithmus, der den Aufgabenvektor als Eingabe empfängt und Daten generiert, die sich auf eine vorhergesagte Zeitdauer für die eine oder die mehreren entsprechenden Aufgaben beziehen (S206);
(iv) Generieren eines Zeitplans (S207), der Daten beinhaltet, die sich auf eine vorhergesagte Zeitplanzeitdauer beziehen, unter Verwendung der Daten, die sich auf die vorhergesagten Zeitdauern beziehen, wobei der Zeitplan die Aufgaben beinhaltet, die in dem Zeitplan geordnet sind, wobei die Daten, die sich auf die vorhergesagte Zeitplanzeitdauer beziehen, eine Wahrscheinlichkeitsverteilung beinhalten und wobei das Generieren der Daten, die sich auf die vorhergesagte Zeitplanzeitdauer beziehen, Folgendes umfassen:
Abtasten einer jeweiligen Wahrscheinlichkeitsverteilung, die sich auf jeden Aufgabenvektor bezieht, eine Vielzahl von Malen, um eine Vielzahl von Dauerwerten zu generieren, die jedem Aufgabenvektor entspricht;
Anwenden der Dauerwerte auf den Zeitplan, um eine Vielzahl von Dauerwerten zu generieren, die dem Zeitplan entspricht;
(v) Bereitstellen des in (iv) generierten Zeitplans, wobei der Zeitplan die Aufgaben, die in dem Zeitplan geordnet sind, und die jeweiligen vorhergesagten Zeitdauern der geordneten Aufgaben beinhaltet.

## Revendications

1. Procédé de construction d'une construction, la construction comprenant une pluralité de tâches, le procédé comprenant les étapes (a) à (f) réalisées par ordinateur consistant à :
(a) utiliser un ensemble de données d'apprentissage (S601) comprenant la pluralité de tâches et des données relatives aux durées réelles pour une ou plusieurs tâches ;
(b) recevoir des données de tâche correspondant à chaque tâche dans l'ensemble de données d'apprentissage (S602), les données de tâche comprenant : des données identifiant un type de tâche ; des données relatives à la durée de tâche planifiée, et des données relatives à de quelconques relations avec une ou plusieurs autres tâches ;
(c) entraîner un premier algorithme pour générer des vecteurs de tâche, en utilisant les données de tâche (S603) ;
(d) générer une première pluralité de vecteurs de tâche (S604), chaque vecteur de tâche correspondant à une ou plusieurs tâches, en utilisant le premier algorithme entraîné qui traite les données de tâche correspondant aux une ou plusieurs tâches, de sorte que chaque tâche possède un vecteur de tâche correspondant ;
(e) pour chaque vecteur de tâche, utiliser un deuxième algorithme qui reçoit le vecteur de tâche en tant qu'entrée et génère des données relatives à une durée prédite pour les une ou plusieurs tâches (S605) ; et
(f) entraîner le deuxième algorithme en utilisant les durées réelles (S606) ;
le procédé comprenant les étapes (i) à (iv) réalisées par ordinateur consistant à :
(i) pour la pluralité de tâches (S201), recevoir des données de tâche (S202) correspondant à chaque tâche, les données de tâche reçues comprenant : des données identifiant un type de tâche ; des données relatives à une durée de tâche planifiée, et des données relatives à de quelconques relations avec une ou plusieurs autres tâches de la pluralité de tâches (S203) ;
(ii) générer une seconde pluralité de vecteurs de tâche (S204, S205), chaque vecteur de tâche correspondant à une ou plusieurs tâches correspondantes de la pluralité de tâches, en utilisant le premier algorithme entraîné qui traite les données de tâche reçues correspondant aux une ou plusieurs tâches correspondantes, de sorte que chaque tâche possède un vecteur de tâche correspondant ;
(iii) pour chaque vecteur de tâche, utiliser le deuxième algorithme entraîné qui reçoit le vecteur de tâche en tant qu'entrée et génère des données relatives à une durée prédite pour les une ou plusieurs tâches correspondantes (S206) ;
(iv) générer un calendrier (S207) comprenant des données relatives à une durée de calendrier prédite, en utilisant les données relatives aux durées prédites, le calendrier comprenant les tâches, qui sont ordonnées dans le calendrier, dans lequel les données relatives à la durée de calendrier prédite comprennent une distribution de probabilité, et dans lequel la génération des données relatives à la durée de calendrier prédite consiste à :
échantillonner une distribution de probabilité respective relative à chaque vecteur de tâche une pluralité de fois, pour générer une pluralité de valeurs de durée correspondant à chaque vecteur de tâche ;
appliquer les valeurs de durée au calendrier pour générer une pluralité de valeurs de durée correspondant au calendrier ;
le procédé comprenant en outre l'étape consistant à :
(v) construire la construction en utilisant le calendrier généré à l'étape (iv), le calendrier comprenant les tâches qui sont ordonnées dans le calendrier, et les durées prédites respectives des tâches ordonnées.

2. Procédé selon la revendication 1, dans lequel la construction est un bâtiment, un pont, un tunnel, un égout, une voie ferrée, un aéroport, un port, un barrage ou une route.

3. Procédé selon l'une quelconque des revendications précédentes, (a) le procédé comprenant l'étape réalisée par ordinateur consistant à : stocker le calendrier comprenant les données relatives à la durée de calendrier prédite, et comprenant les tâches qui sont ordonnées dans le calendrier, et les durées prédites respectives des tâches ordonnées ; ou
(b) dans lequel les durées prédites respectives des tâches ordonnées comprennent des valeurs ajustées des durées de tâche planifiées ; ou
(c) dans lequel les données relatives à de quelconques relations avec une ou plusieurs autres tâches comprennent le nombre d'autres tâches ayant une relation avec la tâche ; ou
(d) dans lequel les données générées relatives à une durée prédite comprennent une distribution de probabilité ; ou
(e) dans lequel un impact des une ou plusieurs tâches correspondantes correspondant à un vecteur de tâche est déterminé par :
l'échantillonnage de la distribution de probabilité relative au vecteur de tâche une pluralité de fois, pour générer une pluralité de valeurs de durée correspondant au vecteur de tâche ;
l'application des valeurs de durée au calendrier pour générer une pluralité de valeurs de durée correspondant au calendrier ; ou
(f) dans lequel l'impact des une ou plusieurs tâches correspondantes correspondant à chaque vecteur de tâche est déterminé ; ou
(g) dans lequel, pour chaque vecteur de tâche, des données sont générées concernant un impact sur la durée de calendrier en utilisant un troisième algorithme entraîné, en utilisant le vecteur de tâche en tant qu'entrée.

4. Procédé selon l'une quelconque des revendications 1 à 3, (a) dans lequel si une tâche, où des données identifiant le type de tâche, des données relatives à la durée de tâche planifiée, et/ou des données relatives à de quelconques relations avec une ou plusieurs autres tâches comprennent une valeur nulle :
un vecteur de tâche est généré en utilisant le premier algorithme entraîné ;
une pluralité d'autres vecteurs de tâche dans le calendrier qui sont similaires au vecteur de tâche sont identifiés ;
des données de tâche pour les autres vecteurs de tâche correspondant aux données comprenant une valeur nulle pour le vecteur de tâche sont identifiées ;
des données de tâche pour le vecteur de tâche sont générées en utilisant les données de tâche pour les autres vecteurs de tâche ;
un vecteur de tâche mis à jour est généré pour la tâche en utilisant un premier algorithme entraîné prenant les données de tâche en tant qu'entrée ; ou
(b) dans lequel le premier algorithme entraîné utilise également les données de tâche correspondant à une ou plusieurs autres tâches liées aux une ou plusieurs tâches correspondantes en tant qu'entrée ; ou
(c) dans lequel les données de tâche correspondant à une ou plusieurs autres tâches sont combinées en un vecteur de longueur fixe, qui est combiné avec les données de tâche pour la tâche en cours ; ou
(d) dans lequel les vecteurs de tâche correspondent à deux ou plusieurs tâches ; ou
(e) dans lequel le nombre de tâches correspondant à un vecteur de tâche est défini par une taille de fenêtre fixe, et dans lequel les données de tâche correspondant aux deux ou plusieurs tâches sont combinées en un vecteur unidimensionnel pour une entrée dans le premier algorithme entraîné ; ou
(f) dans lequel le deuxième algorithme entraîné comprend une pluralité de réseaux de neurones, et dans lequel les données relatives à une durée prédite sont générées en combinant la sortie de la pluralité de réseaux de neurones ; ou
(g) dans lequel le deuxième algorithme est entraîné en donnant une représentation de type 1 contre tous de probabilité a posteriori, où la valeur de P(Rₖ|Tᵢ) pour chaque plage R_{K} est 0, à l'exception de la plage où l'observation vraie, la vérité terrain, s'est réellement produite.

5. Procédé selon l'une quelconque des revendications précédentes, dans lequel le premier algorithme entraîné est une partie d'encodeur d'un auto-encodeur basé sur un réseau de neurones.

6. Procédé selon l'une quelconque des revendications précédentes, le procédé comprenant en outre les étapes réalisées par ordinateur consistant à :
échantillonner la distribution de probabilité relative au vecteur de tâche une pluralité de fois, pour générer une pluralité de valeurs de durée correspondant au vecteur de tâche ;
appliquer les valeurs de durée au calendrier pour générer une pluralité de valeurs de durée correspondant au calendrier ;
déterminer un impact des une ou plusieurs tâches correspondant au vecteur de tâche ;
entraîner un troisième algorithme pour générer des données d'impact, en utilisant l'impact déterminé.

7. Procédé selon l'une quelconque des revendications précédentes, dans lequel le calendrier permet de réduire le risque d'accidents de construction.

8. Procédé selon l'une quelconque des revendications précédentes, dans lequel le calendrier permet d'améliorer la qualité de la construction.

9. Procédé selon l'une quelconque des revendications précédentes, dans lequel le calendrier permet de minimiser le temps pour construire la construction.

10. Procédé selon l'une quelconque des revendications précédentes, (a) comprenant les étapes réalisées par ordinateur consistant en l'analyse syntaxique, par un lecteur d'entrée, de calendriers de projet dans divers formats de fichiers et le traitement des données résultantes, et l'écriture des données traitées dans une base de données commune en utilisant un format standard ; ou
(b) comprenant l'étape réalisée par ordinateur consistant en l'utilisation d'un filtre d'entrée pour détecter et pour éliminer des données de calendrier erronées afin d'empêcher que les données de calendrier erronées ne soient utilisées ultérieurement.

11. Procédé selon l'une quelconque des revendications précédentes, (a) dans lequel les durées prédites comprennent des distributions de probabilité prédites, le procédé comprenant l'utilisation des distributions de probabilité prédites pour simuler les résultats de séquences de tâches afin de simuler la progression du calendrier au cours du temps et de construire des distributions de probabilité pour des jalons de calendrier et l'achèvement de projet ainsi que pour évaluer des facteurs de risque qui peuvent avoir un impact défavorable sur la progression du calendrier ; ou
(b) dans lequel, à l'étape (ii), le processus de transformation est appris à partir de données de calendriers historiques, par la présentation de données provenant de multiples tâches (facultativement, la présentation de données provenant de multiples tâches en même temps), de sorte que le modèle apprend le contexte environnant typique de chaque tâche, et comment la représenter par rapport à ses paires.

12. Procédé selon l'une quelconque des revendications précédentes, dans lequel après que les distributions de résultats de durée ont été estimées, celles-ci sont incluses dans une simulation basée sur un échantillonnage aléatoire, pour estimer la distribution du résultat final, en appliquant les nouvelles durées échantillonnées à la totalité du calendrier, avec des contraintes, en échantillonnant de manière répétée de nouvelles durées pour chaque tâche dans le calendrier et en recalculant la date de fin projetée du calendrier, pour collecter une distribution de résultats possibles.

13. Procédé selon l'une quelconque des revendications précédentes, (a) dans lequel pour une construction partiellement achevée, l'entraînement des premier et deuxième algorithmes comprend l'utilisation de calendriers avec des données relatives à la construction partiellement achevée de la construction ; ou
(b) dans lequel, pour une construction partiellement achevée, un nouveau calendrier est généré, comprenant l'utilisation de données relatives à l'avancement de la construction partiellement achevée.

14. Procédé selon l'une quelconque des revendications précédentes, (a) dans lequel une durée prédite pour les une ou plusieurs tâches est présentée sur un écran en utilisant un histogramme, où chaque classe de l'histogramme représente une prédiction de dimension temporelle de la tâche, and la hauteur de l'histogramme représente la probabilité de ce résultat ; ou (b) dans lequel le calendrier généré comprenant les données relatives à une durée de calendrier prédite, et comprenant les tâches, qui sont ordonnées dans le calendrier, est présenté sur un écran en utilisant un diagramme de Gantt, dans lequel un impact que chaque tâche individuelle a sur le calendrier est mis en évidence, par exemple en utilisant de la couleur et/ou des formes distinctives ; ou
(c) dans lequel pour une construction partiellement achevée, l'avancement réel de la construction est tracé en fonction du temps, et l'avancement initialement planifié de la construction est tracé en fonction du temps, et est présenté sur un écran ; ou
(d) dans lequel pour une construction partiellement achevée, une vraisemblance de probabilité spécifique est reçue en provenance d'un utilisateur, et l'avancement de la construction est tracé en fonction du temps pour la vraisemblance de probabilité spécifique reçue en provenance de l'utilisateur, et est présenté sur un écran ; ou
(e) dans lequel un réseau de tuiles est présenté sur un écran par rapport à deux axes, le premier axe représentant des parties respectives de la construction de la construction, et le second axe représentant des plages respectives de résultats d'achèvement des parties respectives de la construction de la construction, dans lequel chaque tuile comprend une présentation de la probabilité d'occurrence de la plage perverse de résultats d'achèvement ; ou
(f) dans lequel un réseau de tuiles est présenté sur un écran par rapport à deux axes, le premier axe représentant des parties respectives de la construction de la construction, et le second axe représentant des plages respectives de résultats d'achèvement des parties respectives de la construction de la construction, dans lequel chaque tuile comprend une présentation de la probabilité d'occurrence de la plage respective de résultats d'achèvement, et dans lequel le réseau de tuiles fournit une représentation graphique de type carte thermique ; ou
(g) dans lequel le procédé comprend l'étape réalisée par ordinateur consistant à valider ou rejeter le calendrier en comparant un profil de risque à un ensemble prédéfini de paramètres.

15. Système informatique configuré pour fournir un calendrier pour la construction d'une construction, la construction comprenant une pluralité de tâches, le système informatique étant configuré pour :
(a) utiliser un ensemble de données d'apprentissage (S601) comprenant la pluralité de tâches et des données relatives aux durées réelles pour une ou plusieurs tâches ;
(b) recevoir des données de tâche correspondant à chaque tâche dans l'ensemble de données d'apprentissage (S602), les données de tâche comprenant : des données identifiant un type de tâche ; des données relatives à la durée de tâche planifiée, et des données relatives à de quelconques relations avec une ou plusieurs autres tâches ;
(c) entraîner un premier algorithme pour générer des vecteurs de tâche, en utilisant les données de tâche (S603) ;
(d) générer une première pluralité de vecteurs de tâche (S604), chaque vecteur de tâche correspondant à une ou plusieurs tâches, en utilisant le premier algorithme entraîné qui traite les données de tâche correspondant aux une ou plusieurs tâches, de sorte que chaque tâche possède un vecteur de tâche correspondant ;
(e) pour chaque vecteur de tâche, utiliser un deuxième algorithme qui reçoit le vecteur de tâche en tant qu'entrée et génère des données relatives à une durée prédite pour les une ou plusieurs tâches (S605) ; et
(f) entraîner le deuxième algorithme en utilisant les durées réelles (S606) ;
le système informatique étant configuré pour :
(i) pour la pluralité de tâches (S201), recevoir des données de tâche (S202) correspondant à chaque tâche, les données de tâche reçues comprenant : des données identifiant un type de tâche ; des données relatives à une durée de tâche planifiée, et des données relatives à de quelconques relations avec une ou plusieurs autres tâches de la pluralité de tâches (S203) ;
(ii) générer une seconde pluralité de vecteurs de tâche (S204, S205), chaque vecteur de tâche correspondant à une ou plusieurs tâches correspondantes de la pluralité de tâches, en utilisant le premier algorithme entraîné qui traite les données de tâche reçues correspondant aux une ou plusieurs tâches correspondantes, de sorte que chaque tâche possède un vecteur de tâche correspondant ;
(iii) pour chaque vecteur de tâche, utiliser le deuxième algorithme entraîné qui reçoit le vecteur de tâche en tant qu'entrée et génère des données relatives à une durée prédite pour les une ou plusieurs tâches correspondantes (S206) ;
(iv) générer un calendrier (S207) comprenant des données relatives à une durée de calendrier prédite, en utilisant les données relatives aux durées prédites, le calendrier comprenant les tâches, qui sont ordonnées dans le calendrier, dans lequel les données relatives à la durée de calendrier prédite comprennent une distribution de probabilité, et dans lequel la génération des données relatives à la durée de calendrier prédite consiste à :
échantillonner une distribution de probabilité respective relative à chaque vecteur de tâche une pluralité de fois, pour générer une pluralité de valeurs de durée correspondant à chaque vecteur de tâche ;
appliquer les valeurs de durée au calendrier pour générer une pluralité de valeurs de durée correspondant au calendrier ;
(v) fournir le calendrier généré en (iv), le calendrier comprenant les tâches qui sont ordonnées dans le calendrier, et les durées prédites respectives des tâches ordonnées.
